(19) Europäisches Patentamt
European Patent Office
Office européen des brevets

(11) **EP 2 597 502 A1**

(12) **EUROPEAN PATENT APPLICATION**
published in accordance with Art. 153(4) EPC

(43) Date of publication:
**29.05.2013 Bulletin 2013/22**

(51) Int Cl.:
*G02B 7/28* (2006.01)          *G02B 7/08* (2006.01)
*G03B 13/36* (2006.01)         *G03B 35/08* (2006.01)
*H04N 5/225* (2006.01)         *H04N 5/232* (2006.01)
*H04N 13/02* (2006.01)

(21) Application number: **11809515.7**

(22) Date of filing: **15.06.2011**

(86) International application number:
**PCT/JP2011/063662**

(87) International publication number:
**WO 2012/011341 (26.01.2012 Gazette 2012/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.07.2010 JP 2010166170**

(71) Applicant: **Sony Corporation
Tokyo 108-0075 (JP)**

(72) Inventor: **AIZAWA, Hidekuni
Tokyo 108-0075 (JP)**

(74) Representative: **Müller - Hoffmann & Partner
Patentanwälte
Innere Wiener Strasse 17
81667 München (DE)**

(54) **IMAGING DEVICE, METHOD FOR CONTROLLING SAME, AND PROGRAM**

(57)     A left-eye imaging unit generates a left-eye image, and a right-eye imaging unit generates a right-eye image in synchronization with the left-eye image. A focus control unit performs focus control of the left-eye imaging unit such that a subject (a first subject) included in a specific area among subjects included in the left-eye image is in focus. The focus control unit performs focus control of the right-eye imaging unit such that a subject (a second subject) present at a different position from the first subject in an optical axis direction among subjects included in the right-eye image is in focus. In this case, each focus control is performed such that a range of a depth of field when the left-eye image is generated is continuous to a range of a depth of field when the right-eye image is generated with no overlap.

FIG.7

**Description**

Technical Field

The present invention relates to an imaging device, and more particularly, to an imaging device that generates a stereoscopic image, a control method thereof, and a program causing a computer to execute the method.

Background Art

Conventionally, many stereoscopic image display methods of displaying a stereoscopic image capable of obtaining stereoscopic vision using parallax between left and right eyes have been proposed. Further, imaging devices, such as digital still cameras or digital video cameras (camera-integrated recorders), which record a plurality of images (image data) for displaying a stereoscopic image in association with each other, have been proposed.

For example, stereoscopic image capturing devices, which include two imaging units with a focus lens and record two images generated by the imaging units in a recording medium, have been proposed (for example, see Patent Literature 1). In these stereoscopic image capturing devices, an auto-focus (AF) operation is performed such that an AF evaluation value is calculated by moving each focus lens, and one focus lens is set to a position of the other focus lens that has first detected a maximum AF evaluation value.

Citation List

Patent Literature

Patent Literature 1:    JP 2006-162990A

Summary of Invention

Technical Problem

In the above-described conventional technique, since one focus lens is set to a position of the other focus lens that has first detected a maximum AF evaluation value, an AF operation can be performed in a relatively short time. That is, when the same subjects included in two images generated by the two imaging units are set as focus targets, the subjects of the focus target can be rapidly focused, and thus the AF operation can be performed in a relatively short time.

For example, when a focal distance of a lens is long and a distance to a subject is short, or under exposure circumstances in which sufficient illuminance is not obtained and a diaphragm is relatively opened, a depth of field (DOF) before and after a focus position is shallow. When an image generated in a state in which the depth of field is shallow is displayed, the image is displayed such that a subject included in the shallow depth of field is in focus, but other subjects blur.

Here, let us assume that a stereoscopic image is displayed using a left-eye image and a right-eye image generated in a state in which the depth of field before and after the focus position is shallow. When the stereoscopic image generated as described above is displayed, the stereoscopic image is displayed as an image in which a subject included in the shallow depth of field is in focus but other subjects look blurred. In this case, the focused subject can be shown to a user as a vivid stereoscopic image, however, other subjects are shown as a blurred stereoscopic image as such.

For example, since a human can focus on all objects included in a field of vision, the human can stereoscopically view an object included in a field of vision relatively freely in many cases. Here, let us assume that, among subjects included in a displayed stereoscopic image, a relatively small number of subjects are in focus when the user views the stereoscopic image. In this case, the user can stereoscopically view the relatively small number of subjects (focused subjects) relatively freely as described above. However, since other subjects look blurred, it is difficult for the user to view other subjects in the same way as the focused subject. Since it is different from a state in which the user can relatively freely view a subject included in a field of vision, the user may feel uncomfortable.

Thus, it is important to generate a stereoscopic image in which subjects included in a relatively broad range can be appropriately stereoscopically viewed even under an imaging condition in which the depth of field is relatively shallow and to thereby allow the user to naturally view the stereoscopic image.

The present invention is made in light of the foregoing, and it is an object of the present invention to increase a focused image area when a stereoscopic image is generated.

Solution to Problem

According to a first aspect of the present invention in order to achieve the above-mentioned object, there are provided an imaging device including an imaging unit that images a subject and generates a first image and a second image for displaying a stereoscopic image for stereoscopic vision of the subject and a focus control unit that performs focus control in the imaging unit such that a first subject, which is a subject included in a specific area among subjects included in the first image, is in focus when the first image is generated and performs focus control in the imaging unit such that a second subject, which is another subject present at a different position from the first subject in an optical axis direction among subjects included in the second image, is in focus when the second image is generated, a method of controlling the imaging device, and a program causing a computer to execute the method. This leads to an effect of performing focus control such that a subject (first subject) included in a specific area among subjects included in the first image is in focus when the first image is generated and performing focus control such that another subject (second subject) present at a different position from the first subject in an optical axis direction among subjects included in the second image is in focus when the second image is generated.

In the first aspect, the focus control unit may perform each focus control such that a range of a depth of field when the first image is generated is different from a range of a depth of field when the second image is generated. This leads to an effect of performing each focus control such that a range of a depth of field when the first image is generated is different from a range of a depth of field when the second image is generated.

Further, in the first aspect, the focus control unit may perform each focus control such that the range of the depth of field when the first image is generated is continuous to the range of the depth of field when the second image is generated with no overlap. This leads to an effect of performing each focus control such that the range of the depth of field when the first image is generated is continuous to the range of the depth of field when the second image is generated with no overlap.

Further, in the first aspect, the focus control unit may perform each focus control such that the range of the depth of field when the first image is generated overlaps the range of the depth of field when the second image is generated. This leads to an effect of performing each focus control such that the range of the depth of field when the first image is generated overlaps the range of the depth of field when the second image is generated.

Further, in the first aspect, the focus control unit may perform each focus control such that the range of the depth of field when the first image is generated is discontinuous to the range of the depth of field when the second image is generated when a certain condition is satisfied. This leads to an effect of performing each focus control such that the range of the depth of field when the first image is generated is discontinuous to the range of the depth of field when the second image is generated when a certain condition is satisfied.

Further, in the first aspect, the certain condition may be a condition in which two objects whose backgrounds have substantially the same color and which are present at the imaging device side farther than the backgrounds and away from each other by a predetermined value or more in an optical axis direction are set as the first subject and the second subject, and the focus control unit may perform each focus control such that the ranges are discontinuous to each other when the certain condition is satisfied. This leads to an effect of setting a condition in which two objects whose backgrounds have substantially the same color and which are present at the imaging device side farther than the backgrounds and away from each other by a predetermined value or more in an optical axis direction are set as the first subject and the second subject as the certain condition and performing each focus control such that the ranges are discontinuous to each other when the certain condition is satisfied.

Further, in the first aspect, the imaging unit may include a first imaging unit that generates the first image and a second imaging unit that generates the second image in synchronization with the first image, and the focus control unit may perform focus control using a first focus lens included in the first imaging unit such that the first subject is in focus when the first image is generated, and performs focus control using a second focus lens included in the second imaging unit such that the second subject is in focus when the second image is generated. This leads to an effect of performing focus control using a first focus lens included in the first imaging unit such that the first subject is in focus when the first image is generated and performing focus control using a second focus lens included in the second imaging unit such that the second subject is in focus when the second image is generated.

Further, in the first aspect, the focus control unit may perform focus control using the second focus lens such that the second subject included in a range different from a range of a first depth of field specified by a position of the first subject, an F value, and a focal distance of a lens is in focus. This leads to an effect of performing focus control using the second focus lens such that the second subject included in a range different from a range of a first depth of field specified by a position of the first subject, an F value, and a focal distance of a lens is in focus.

Further, in the first aspect, the focus control unit may synchronize the first focus lens with the second focus lens and perform the focus control when the first subject and the second subject are present within a range of a hyperfocal distance. This leads to an effect of synchronizing the first focus lens with the second focus lens and performing the focus control when the first subject and the second subject are present within a range of a hyperfocal distance.

Further, in the first aspect, the focus control unit may perform focus control in the imaging unit such that the first subject included in the first image is in focus and perform focus control in the imaging unit such that the second subject included in the second image is in focus when a focal distance of a lens in the imaging unit is long and a subject distance related to the first subject is short or when an F value is smaller than a predetermined value. This leads to an effect of performing focus control in the imaging unit such that the first subject included in the first image is in focus and performing focus control in the imaging unit such that the second subject included in the second image is in focus when a focal distance of a lens in the imaging unit is long and a subject distance related to the first subject is short or when an F value is smaller than a predetermined value.

Further, in the first aspect, the imaging device may further include an operation receiving unit that receives a selection operation of selecting whether the second subject is a subject present at the imaging device side farther than the first subject in the optical axis direction or a subject present at the side farther than the first subject in the optical axis direction, and the focus control unit may perform focus control such that the selected subject is in focus when the second image is generated. This leads to an effect of performing focus control such that a subject selected by a selecting operation is in focus when the second image is generated.

Further, in the first aspect, the imaging device may further include a recording control unit that causes the generated first image and second image to be recorded in a recording medium as moving image content in association with each other. This leads to an effect of causing the generated first image and second image to be recorded in a recording medium as moving image content in association with each other.

Further, in the first aspect, the imaging device may further include a recording control unit that causes the generated first image and second image to be recorded in a recording medium as still image content in association with each other. This leads to an effect of causing the generated first image and second image to be recorded in a recording medium as still image content in association with each other.

Further, in the first aspect, the imaging device may further include an operation receiving unit that receives an instruction operation for recording the still image and a control unit that performs control of causing the imaging unit to continuously perform a first imaging operation and a second imaging operation when the instruction operation is received, the first imaging operation generating the first image and the second image by performing each focus control such that each of the first subject and the second subject is in focus and the second imaging operation generating the first image and the second image by performing each focus control such that at least one of the first subject and the second subject is in focus, and the recording control unit may cause the first and second images generated by the first imaging operation and the first and second images generated by the second imaging operation to be recorded in the recording medium as still image content in association with each other. This leads to an effect of continuously performing the first imaging operation generating the first image and the second image by performing each focus control such that each of the first subject and the second subject is in focus and the second imaging operation generating the first image and the second image by performing each focus control such that at least one of the first subject and the second subject is in focus when an instruction operation for recording a still image is received, and causing the first and second images generated by the first imaging operation and the first and second images generated by the second imaging operation to be recorded in the recording medium as still image content in association with each other.

Further, in the first aspect, the recording control unit may record identification information representing generation by the first imaging operation in association with the first and second images generated by the first imaging operation. This reads to an effect of recording identification information representing generation by the first imaging operation in association with the first and second images generated by the first imaging operation.

Advantageous Effects of Invention

According to the present invention, there is an effect of increasing a focused image area when a stereoscopic image is generated.

Brief Description of Drawings

[Fig. 1] Fig. 1 is a perspective view illustrating an external appearance of an imaging device 100 according to a first embodiment of the present disclosure.
[Fig. 2] Fig. 2 is a block diagram illustrating an internal configuration example of the imaging device 100 according to the first embodiment of the present disclosure.
[Fig. 3] Fig. 3 is a block diagram illustrating a functional configuration example of the imaging device 100 according to the first embodiment of the present disclosure.

[Fig. 4A] Fig. 4A is a diagram illustrating a display example of an input/output panel 190 according to the first embodiment of the present disclosure.

[Fig. 4B] Fig. 4B is a diagram illustrating a display example of the input/output panel 190 according to the first embodiment of the present disclosure.

[Fig. 5A] Fig. 5A is a diagram illustrating a display example of the input/output panel 190 according to the first embodiment of the present disclosure.

[Fig. 5B] Fig. 5B is a diagram illustrating an example of the content held in a stereoscopic image imaging condition holding unit 122 according to the first embodiment of the present disclosure.

[Fig. 6] Fig. 6 is a diagram schematically illustrating a relation among a permissible circle of confusion of imaging elements 250 and 350, lenses configuring an optical system, and a depth of field according to the first embodiment of the present disclosure.

[Fig. 7] Fig. 7 is diagrams schematically illustrating a relation between a depth of field set by a focus control unit 123 and a subject according to the first embodiment of the present disclosure.

[Fig. 8] Fig. 8 illustrates an example of a set of images (still images) respectively generated by a left-eye imaging unit 200 and a right-eye imaging unit 300 according to the first embodiment of the present disclosure.

[Fig. 9] Fig. 9 illustrates an example of a set of images (still images) respectively generated by a left-eye imaging unit 200 and a right-eye imaging unit 300 according to the first embodiment of the present disclosure.

[Fig. 10] Fig. 10 is a flowchart illustrating an example of a processing procedure of a focus control process by the imaging device 100 according to the first embodiment of the present disclosure.

[Fig. 11] Fig. 11 is a block diagram illustrating a functional configuration example of an imaging device 670 according to the first embodiment of the present disclosure.

[Fig. 12] Fig. 12 is a diagram illustrating an example of a focus position table held in a focus position table holding unit 680 according to the first embodiment of the present disclosure.

[Fig. 13A] Fig. 13A illustrates a display example of the input/output panel 190 according to a second embodiment of the present disclosure.

[Fig. 13B] Fig. 13B is a diagram illustrating an example of the content held in a stereoscopic image imaging condition holding unit 127 according to the second embodiment of the present disclosure.

[Figs. 14A to 14C] Figs. 14A to Fig. 14C are diagrams schematically illustrating recording examples of an image generated by an imaging operation by an imaging device 700 according to the second embodiment of the present disclosure.

[Fig. 15] Fig. 15 is a diagram illustrating an example of a state of an imaging operation performed using an imaging device 750 and an imaging range of an image generated by an imaging operation according to a third embodiment of the present disclosure.

[Fig. 16A] Fig. 16A illustrates a display example of the input/output panel 190 according to the third embodiment of the present disclosure.

[Fig. 16B] Fig. 16B is a diagram illustrating an example of the content held in a stereoscopic image imaging condition holding unit 128 according to the third embodiment of the present disclosure.

[Fig. 17] Fig. 17 is a diagram schematically illustrating a relation between a depth of field set by the focus control unit 123 and a subject according to the third embodiment of the present disclosure.

Description of Embodiments

Hereinafter, embodiments (hereinafter referred to as "embodiment") for carrying out the present disclosure will be described. The description will be made in the following order.

1. First Embodiment (Focus Control: Example of Generating Stereoscopic Image such that Focus Positions of Two Imaging Units are Set to be Different from Each Other to Cause Depths of Field of Two Imaging Units to be Continuous)
2. Second Embodiment (Focus Control: Example of Continuously Recording a Stereoscopic Image in which Focus Positions of Two Imaging Units are Different from Each Other and a Stereoscopic Image in which Focus Positions of Two Imaging Units are Identical to Each Other)
3. Third Embodiment (Focus Control: Example of Generating Stereoscopic Image such that Focus Positions of Two Imaging Units are Set to be Different from Each Other to Cause Depths of Field of Two Imaging Units to be Discontinuous)

<1. First Embodiment>

[External Appearance Configuration Example of Imaging Device]

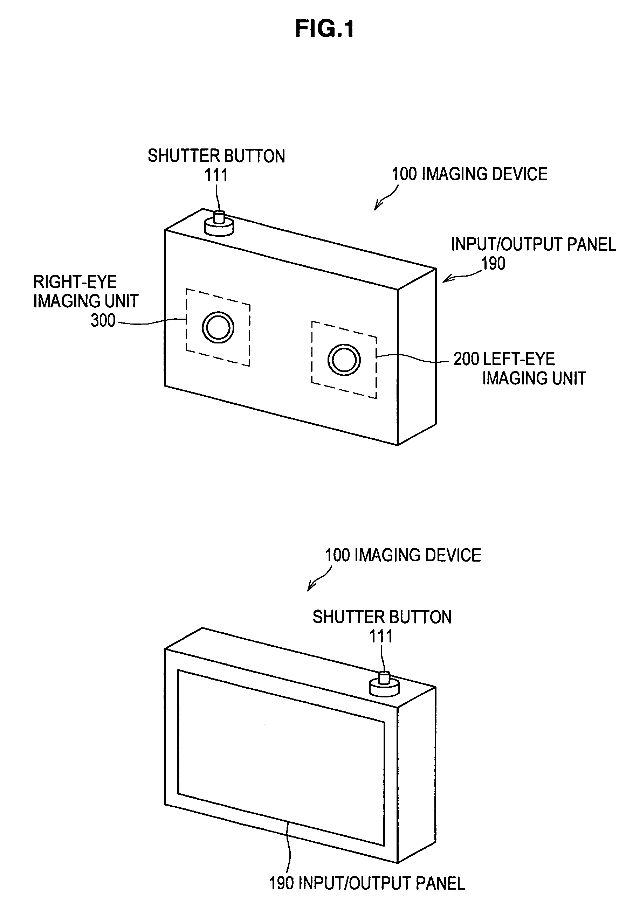

Fig. 1 is a perspective view illustrating an external appearance of an imaging device 100 according to a first embodiment of the present disclosure. An upper view of Fig. 1 is a perspective view illustrating an external appearance of the imaging device 100 seen at the front side (that is, a side on which lenses directed toward a subject are provided). A lower view of Fig. 1 is a perspective view illustrating an external appearance of the imaging device 100 seen at the back side (that is, a side on which an input/output panel 190 directed toward a photographer is provided).

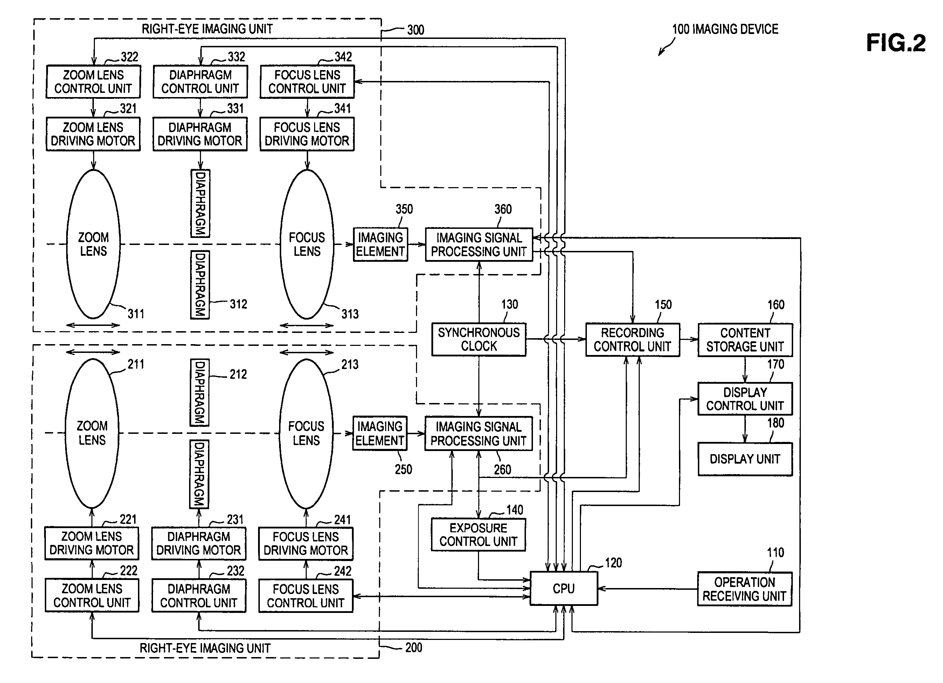

The imaging device 100 includes a shutter button 111, the input/output panel 190, a left-eye imaging unit 200, and a right-eye imaging unit 300. The imaging device 100 is an imaging device that can image a subject, generate an imaged image (image data), and record the generated imaged image in a recording medium (a content storage unit 160 illustrated in Fig. 2) as image content (still image content or moving image content). Further, the imaging device 100 is an imaging device that supports a stereoscopic imaging function and can generate image content for displaying a stereoscopic image (a three-dimensional (3D) image). The stereoscopic image (3D image) is an image capable of realizing stereoscopic vision using parallax between the left and right eyes. For example, the left-eye imaging unit 200 and the right-eye imaging unit 300 image a subject and generate two imaged images (an image for left-eye vision (a left-eye image) and an image for right-eye vision (a right-eye image) for displaying a stereoscopic image). Image content for displaying a stereoscopic image is generated based on the two generated imaged images. The imaging device 100 further includes other operating members such as a power supply switch, a mode changing switch, and a zoom button. However, illustration and description thereof will be omitted.

The shutter button 111 is a button which the user presses to record the imaged image (image data) generated by imaging the subject as the image content. For example, in a state in which a still image imaging mode for recording a still image is set, when the shutter button 111 is pressed halfway, focus control for performing an auto-focus operation is performed. Further, when the shutter button 111 is fully pressed, the focus control is performed. Then, imaged images respectively imaged by the left-eye imaging unit 200 and the right-eye imaging unit 300 when fully pressed are recorded in a recording medium in association with each other.

The input/output panel 190 displays various images. The input/output panel 190 detects a contact operation on the input/output panel 190 and receives an operation input from the user.

The left-eye imaging unit 200 and the right-eye imaging unit 300 will be described in detail with reference to Fig. 2.

[Internal Configuration Example of Imaging Device]

Fig. 2 is a block diagram illustrating an internal configuration example of the imaging device 100 according to the first embodiment of the present disclosure. The imaging device 100 includes an operation receiving unit 110, a central processing unit (CPU) 120, a synchronous clock 130, an exposure control unit 140, a recording control unit 150, the content storage unit 160, a display control unit 170, and a display unit 180. The imaging device 100 further includes the left-eye imaging unit 200 and the right-eye imaging unit 300.

The left-eye imaging unit 200 and the right-eye imaging unit 300 are configured such that optical systems, imaging elements, and imaging signal processing units are arranged on the left and right, respectively, as a set, so as to generate a left-eye image and a right-eye image. That is, the left-eye imaging unit 200 includes a zoom lens 211, a diaphragm 212, a focus lens 213, a zoom lens driving motor 221, a zoom lens control unit 222, a diaphragm driving motor 231, and a diaphragm control unit 232. The left-eye imaging unit 200 further includes a focus lens driving motor 241, a focus lens control unit 242, an imaging element 250, and an imaging signal processing unit 260. The right-eye imaging unit 300 includes a zoom lens 311, a diaphragm 312, a focus lens 313, a focus lens driving motor 321, a zoom lens control unit 322, a diaphragm driving motor 331, and a diaphragm control unit 332. The right-eye imaging unit 300 further includes a focus lens driving motor 341, a focus lens control unit 342, an imaging element 350, and an imaging signal processing unit 360.

The components (the lenses, the imaging elements, and the like) of the left-eye imaging unit 200 and the right-eye imaging unit 300 are substantially the same as each other excluding an arrangement position. For this reason, in the following, a description of any one of the left and right configurations will be partially omitted.

The zoom lens 211 is a lens that moves in an optical axis direction through driving of the zoom lens driving motor 221 and adjusts a focal distance. That is, the zoom lens 211 is a lens that is driven back and forth with respect to a subject so as to zoom in on or zoom out from a subject included in an imaged image. A zoom function is implemented by the zoom lens 211.

The zoom lens driving motor 221 is a motor that rotates in response to a driving control signal output from the zoom lens control unit 222 and moves the zoom lens 211 in the optical axis direction to adjust the focal distance.

The zoom lens control unit 222 generates the driving control signal for rotating the zoom lens driving motor 221 based on a control signal output from the CPU 120, and outputs the driving control signal to the zoom lens driving motor 221.

The diaphragm 212 adjusts a light quantity of incident light passing through the zoom lens 211 and the focus lens 213 (that is, exposure), and light whose quantity has been adjusted is supplied to the imaging element 250. The diaphragm 212 is driven by the diaphragm driving motor 231, so that the aperture of the diaphragm is adjusted.

The diaphragm driving motor 231 is a motor that rotates in response to a driving control signal output from the diaphragm control unit 232 and opens or closes the diaphragm 212 to adjust an F value (a diaphragm value).

The diaphragm control unit 232 generates a driving control signal for rotating the diaphragm driving motor 231 based on a control signal output from the CPU 120 and outputs the driving control signal to the diaphragm driving motor 231.

The focus lens 213 is a lens that moves in the optical axis direction through driving of the focus lens driving motor 241 and adjusts a focus. That is, the focus lens 213 is a lens used to cause a desired object included in an imaged image to be in focus. An auto-focus function is implemented by the focus lens 213.

The focus lens driving motor 241 is a motor that rotates in response to a driving control signal output from the focus lens control unit 242 and moves the focus lens 213 in the optical axis direction to adjust a focus position.

The focus lens control unit 242 generates a driving control signal for rotating the focus lens driving motor 241 based on a control signal output from the CPU 120 and outputs the driving control signal to the focus lens driving motor 241.

As described above, the zoom lens 211 and the focus lens 213 are a group of lenses for collecting incident light from a subject. Light collected by the group of lenses is subjected to light quantity adjustment by the diaphragm 212 and then is incident to the imaging element 250.

The imaging element 250 performs a photoelectric conversion process on the incident light having passed through the zoom lens 211, the diaphragm 212, and the focus lens 213 and then supplies the imaging signal processing unit 260 with a photoelectric converted electric signal (an image signal). That is, the imaging element 250 receives light which is incident from a subject via the zoom lens 211 and the focus lens 213 and performs photoelectric conversion to generate an analog image signal corresponding to a received quantity of light. The imaging element 250 and the imaging element 350 (the right-eye imaging unit 300) form subject images incident via the lenses by synchronization driving based on a clock signal of the synchronous clock 130 and generate analog image signals. The analog image signal generated by the imaging element 250 is supplied to the imaging signal processing unit 260, and the analog image signal generated by the imaging element 350 is supplied to the imaging signal processing unit 360. A charge coupled device (CCD), a complementary metal-oxide semiconductor (CMOS), or the like may be used as the imaging elements 250 and 350.

The imaging signal processing unit 260 is a left-eye imaging signal processing unit that executes various signal processings on the analog image signal supplied from the imaging element 250 based on control of the CPU 120. The imaging signal processing unit 260 outputs a digital image signal (left-eye image) generated by executing various signal processings to the CPU 120 and the recording control unit 150. The imaging signal processing unit 360 is a right-eye imaging signal processing unit that executes various signal processings on the analog image signal supplied from the imaging element 350 based on control of the CPU 120. The imaging signal processing unit 360 outputs a digital image signal (right-eye image) generated by executing various signal processings to the CPU 120, the exposure control unit 140, and the recording control unit 150. The left-eye imaging unit 200 and the right-eye imaging unit 300 output various imaging information (a focal distance of a reference lens, an F value, and the like) to the CPU 120.

The operation receiving unit 110 is an operation receiving unit that receives an operation input by the user and supplies the CPU 120 with an operation signal corresponding to the content of the received operation input. For example, the operation receiving unit 110 corresponds to an operating member such as the shutter button 111, the input/output panel 190, various operation buttons, or various operation dials. For example, the imaging device 100 may be provided with a zoom button (a W (wide) button and a T (telephoto) button) used for the user to perform the zoom operation. In a state in which the W button of the zoom button is pushed, the zoom lenses 211 and 311 are moved to a wide angle end side (a telephoto side), whereas in a state in which the T button is pushed, the zoom lenses 211 and 311 are moved to a telephoto end side (a wide angle side). For example, the operation receiving unit 110 receives a setting operation for setting various imaging conditions of a stereoscopic image imaging mode. Furthermore, for example, the operation receiving unit 110 receives a setting operation for setting each imaging mode and an instruction operation for instructing recording of an image. The first embodiment of the present disclosure is described in connection with an example in which the imaging device 100 sets the stereoscopic image imaging mode (for example, a still image imaging mode or a moving image imaging mode) for recording a stereoscopic image.

The CPU 120 generates control signals to be supplied to the respective components of the imaging device 100, supplies the generated control signal to the respective components, and performs various control such as zoom control, focus control, shutter control, and an image recording process. For example, the CPU 120 generates a control signal for moving the focus lenses 213 and 313 and performs AF control for detecting a focus position for a predetermined subject. Specifically, the CPU 120 moves the focus lenses 213 and 313 and performs AF control for imaged images corresponding to image signals output from the imaging signal processing unit 260 and the imaging signal processing unit 360.

The exposure control unit 140 controls exposure times of the imaging elements 250 and 350 based on an image signal output from the imaging signal processing unit 260. That is, the exposure control unit 140 decides exposure times of the imaging elements 250 and 350 based on brightness of a subject in an image corresponding to an image signal output from the imaging signal processing unit 260, and outputs the decided exposure times to the CPU 120.

The recording control unit 150 causes images output from the left-eye imaging unit 200 and the right-eye imaging unit 300 to be recorded in the content storage unit 160 as image files (image content) based on control of the CPU 120. For example, the recording control unit 150 records a left-eye image output from the imaging signal processing unit 260 and a right-eye image output from the imaging signal processing unit 360 in the content storage unit 160 in association with each other according to a clock signal of the synchronous clock 130.

For example, when the operation receiving unit 110 receives an instruction operation for recording a still image, the recording control unit 150 causes the left-eye image and the right-eye image to be recorded in the content storage unit 160 in association with each other as a still image file (still image content). At the time of recording, attribute information such as date and time information at the time of imaging is recorded in an image file. The instruction operation for recording a still image is performed, for example, by an operation of pressing the shutter button 111 (illustrated in Fig. 1). For example, the recording control unit 150 may cause an order relation (for example, a point-of-view number) between the left-eye image and the right-eye image to be recorded in a recording medium in association with the left-eye image and the right-eye image as a multi-picture (MP) file. The MP file refers to a file that conforms to an MP format for recording a plurality of still images as a single file (extension: .MPO).

For example, let us assume that the operation receiving unit 110 receives an instruction operation for recording a moving image. In this case, the recording control unit 150 sequentially records the left-eye image and the right-eye image output from the imaging signal processing units 260 and 360 in the content storage unit 160 at a predetermined frame rate as a moving image file (moving image content). For example, the instruction operation for recording a moving image is performed by an operation of pressing a record button.

The content storage unit 160 stores the images output from the left-eye imaging unit 200 and the right-eye imaging unit 300 as an image file (image content) in association with each other based on control of the recording control unit 150. For example, a removable recording medium (one or more recording media) such as a disc such as a digital versatile disc (DVD) or a semiconductor memory such as a memory card may be used as the content storage unit 160. The recording medium may be built in the imaging device 100 or may be removably mounted to the imaging device 100.

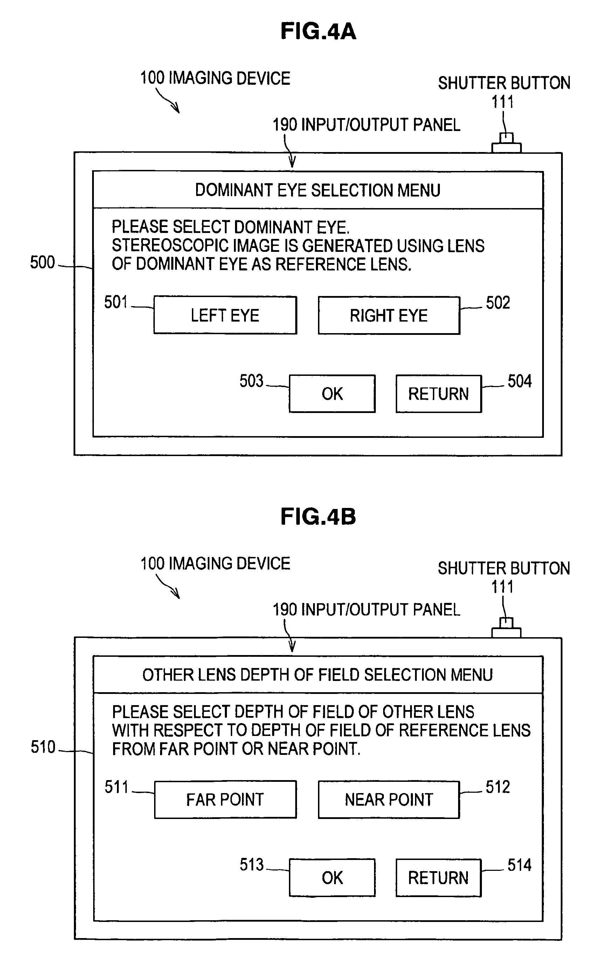

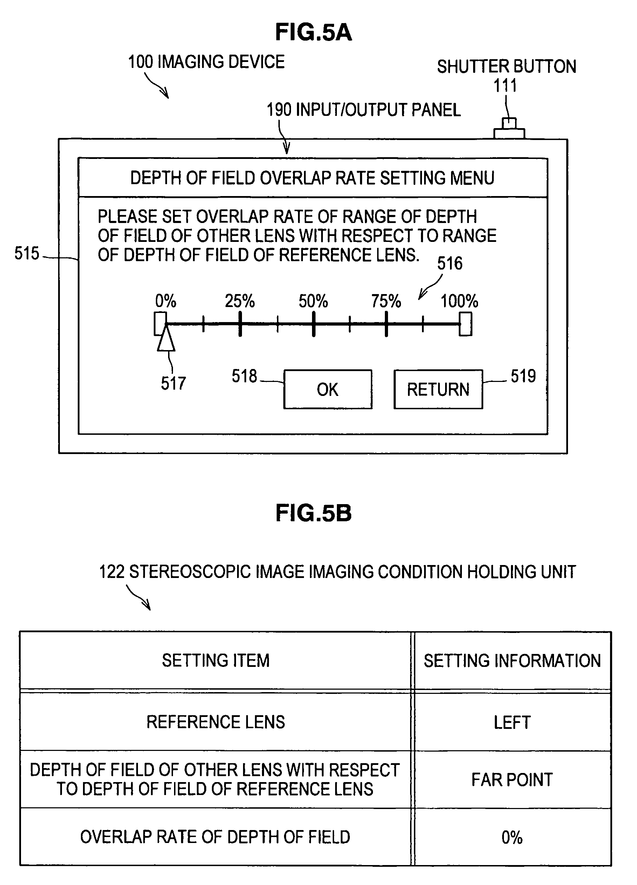

The display control unit 170 causes various images to be displayed on the display unit 180 based on control of the CPU 120. For example, when the operation receiving unit 110 receives an instruction operation for displaying a stereoscopic image (still image), the display control unit 170 acquires image content for displaying the stereoscopic image (still image) from the content storage unit 160. Then, the display control unit 170 causes the image content to be displayed on the display unit 180. Further, the display control unit 170 causes various screens (for example, various setting screens illustrated in Figs. 4A, 4B, and 5A) to be displayed on the display unit 180 based on control of the CPU 120. When the still image imaging mode is set, the display control unit 170 may cause images generated by the left-eye imaging unit 200 and the right-eye imaging unit 300 to be displayed on the display unit 180 as a monitoring image (a stereoscopic image or a planar image).

The display unit 180 is a display unit that displays image content stored in the content storage unit 160 based on control of the display control unit 170. The display unit 180 displays various menu screens or various images. For example, a liquid crystal display (LCD), an organic electroluminescence (EL) panel, or the like may be used as the display unit 180. The input/output panel 190 illustrated in Fig. 1 is configured with the operation receiving unit 110 and the display unit 180.

[Functional Configuration Example of Imaging Device]

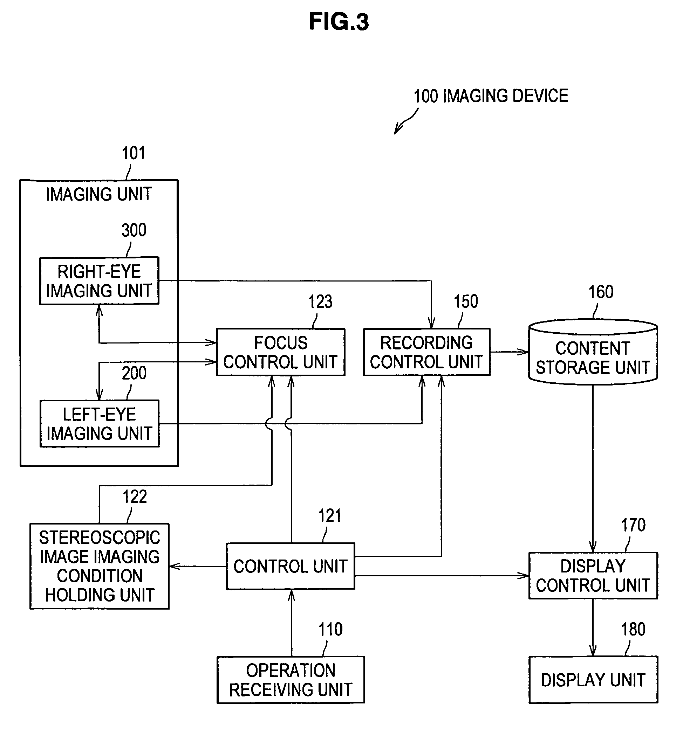

Fig. 3 is a block diagram illustrating a functional configuration example of the imaging device 100 according to the first embodiment of the present disclosure. The imaging device 100 includes an imaging unit 101, an operation receiving unit 110, a control unit 121, a stereoscopic image imaging condition holding unit 122, a focus control unit 123, a recording control unit 150, a content storage unit 160, a display control unit 170, and a display unit 180. The imaging unit 101 corresponds to the left-eye imaging unit 200 and the right-eye imaging unit 300 illustrated in Fig. 2. The operation receiving unit 110, the recording control unit 150, the content storage unit 160, the display control unit 170, and the display unit 180 correspond to the components having the same reference numerals illustrated in Fig. 2. Thus, a description thereof will be partially omitted. Further, the control unit 121, the stereoscopic image imaging condition holding unit 122, and the focus control unit 123 correspond to the CPU 120 illustrated in Fig. 2.

The imaging unit 101 includes the left-eye imaging unit 200 and the right-eye imaging unit 300, images a subject, and generates a left-eye image and a right-eye image for displaying a stereoscopic image for stereoscopic vision of the subject. Then, the imaging unit 101 outputs the generated left-eye image and the right-eye image to the focus control unit 123 and the recording control unit 150. The imaging unit 101 outputs imaging information (a focal distance of a reference lens, an F value, and the like) of each of the left-eye imaging unit 200 and the right-eye imaging unit 300 to the focus control unit 123. Focus control in the left-eye imaging unit 200 and the right-eye imaging unit 300 is performed based on control of the focus control unit 123.

The control unit 121 controls the respective components of the imaging device 100 based on operation content from the operation receiving unit 110. For example, when the operation receiving unit 110 receives a setting operation for setting various imaging conditions of the stereoscopic image imaging mode, the control unit 121 causes the setting information according to the setting operation to be held in the stereoscopic image imaging condition holding unit 122.

For example, when the operation receiving unit 110 receives a setting operation for setting the still image imaging mode, the control unit 121 notifies the imaging unit 101, the focus control unit 123, and the recording control unit 150 of reception of the setting operation and sets the still image imaging mode. For example, when the operation receiving unit 110 receives a still image recording instruction operation for instructing recording of a still image in a state in which the still image imaging mode is set, the control unit 121 causes the respective components to execute a recording process for recording a still image of a stereoscopic image. Specifically, the control unit 121 causes the focus control unit 123 to perform the focus control in the left-eye imaging unit 200 and the right-eye imaging unit 300 and causes the imaging unit 101 to generate a left-eye image and a right-eye image. Then, the control unit 121 causes the generated left-eye image and the right-eye image to be recorded in the content storage unit 160 as a still image file of a stereoscopic image by control of the recording control unit 150.

For example, when the operation receiving unit 110 receives a moving image recording instruction operation for instructing recording of a moving image in a state in which the moving image imaging mode is set, the control unit 121 causes the respective components to execute a recording process for recording a moving image of a stereoscopic image.

For example, when the operation receiving unit 110 receives a replay instruction operation for instructing replay of a still image or a moving image in a state in which a replay mode is set, the control unit 121 causes the respective components to execute a replay process of replaying the still image or the moving image. For example, the display control unit 170 acquires image content related to the relay instruction operation from the content storage unit 160 and causes each image to be displayed on the display unit 180 based on the acquired image content.

The stereoscopic image imaging condition holding unit 122 holds setting information for setting various imaging conditions of the stereoscopic image imaging mode and supplies the focus control unit 123 with the held setting information. The setting information held in the stereoscopic image imaging condition holding unit 122 is updated by the control unit 121 each time the operation receiving unit 110 receives the setting operation for setting various imaging conditions of the stereoscopic image imaging mode. The content held in the stereoscopic image imaging condition holding unit 122 will be described in detail with reference to Fig. 5B.

The focus control unit 123 performs focus control by moving the focus lenses 213 and 313 in the left-eye imaging unit 200 and the right-eye imaging unit 300. That is, the focus control unit 123 generates an AF evaluation value (contrast signal) from images output from the left-eye imaging unit 200 and the right-eye imaging unit 300. Then, the focus control unit 123 performs focus control based on the generated AF evaluation value and imaging information acquired from the left-eye imaging unit 200 and the right-eye imaging unit 300. That is, the focus control unit 123 extracts a high frequency component of a spatial frequency of an image in an AF area (specific area) included in an imaged image, and generates a brightness difference (AF evaluation value) of the extracted high frequency. The focus position is detected based on the generated AF evaluation value. For example, the focus control unit 123 performs the focus control when an operation of pressing the shutter button 111 halfway or fully is performed. For example, the focus control unit 123 performs the focus control during a moving image recording operation.

Here, let us assume that the still image imaging mode is set, and among the left-eye imaging unit 200 and the right-eye imaging unit 300, the left-eye imaging unit 200 is used as a reference. In this case, the focus control unit 123 performs focus control in the left-eye imaging unit 200 so that a subject (a first subject) included in the specific area among subjects included in the left-eye image can be in focus when the left-eye image is generated. The focus control unit 123 performs focus control in the right-eye imaging unit 300 so that another subject (a second subject) present at a different position from the first subject in the optical axis direction among subjects included in the right-eye image can be in focus when the right-eye image is generated. That is, the focus control unit 123 performs focus control in each of the left-eye imaging unit 200 and the right-eye imaging unit 300 so that the range of the depth of field when the left-eye image is generated can be different from the range of the depth of field when the right-eye image is generated. For example, the focus control unit 123 performs each focus control so that the range of the depth of field when the left-eye image is generated can be continuous with the range of the depth of field when the right-eye image is generated with no overlap. In addition, for example, the focus control unit 123 performs each focus control so that the range of the depth of field when the left-eye image is generated can overlap the range of the depth of filed when the right-eye image is generated. Each focus control can be performed based on the user's setting. Each focus control may be automatically performed by the imaging device 100 when a certain condition is satisfied. For example, a condition in which a focal distance of a lens in the imaging unit 101 is long and a subject distance related to a subject (for example, a subject present at a central position of an image) which is a focus target of the imaging unit 101 is short may be set as the certain condition. Or, a condition in which an F value is smaller than a certain value as a reference may be set as the certain condition.

As described above, the imaging device 100 includes at least left and right independent optical systems and can independently perform a focus adjustment of a subject. Further, the imaging device 100 generates a stereoscopic image by setting a difference between left and right focus positions in terms of a focal distance of an imaging lens, a distance to a subject, and an F value according to an exposure value and causing the depths of field to overlap each other. As described above, the imaging device 100 can perform the recording process on both the moving image and the still image. However, in the following, a description will be made in connection with a still image generating process and a still image recording process.

[Imaging Condition Setting Example]

Figs.4A to 5B are diagrams illustrating a display example of the input/output panel 190 and an example of the content held in the stereoscopic image imaging condition holding unit 122 according to the first embodiment of the present disclosure. A setting screen 500 illustrated in Fig. 4A is a screen, displayed on the input/output panel 190, for setting a lens (the focus lens 213 or 313) used as a reference lens when focus control is performed by the focus control unit 123. For example, the setting screen 500 is displayed directly after the setting operation of the stereoscopic image imaging mode for recording a stereoscopic image is performed. The setting screen 500 is provided with a left-eye button 501, a right-eye button 502, an OK button 503, and a return button 504.

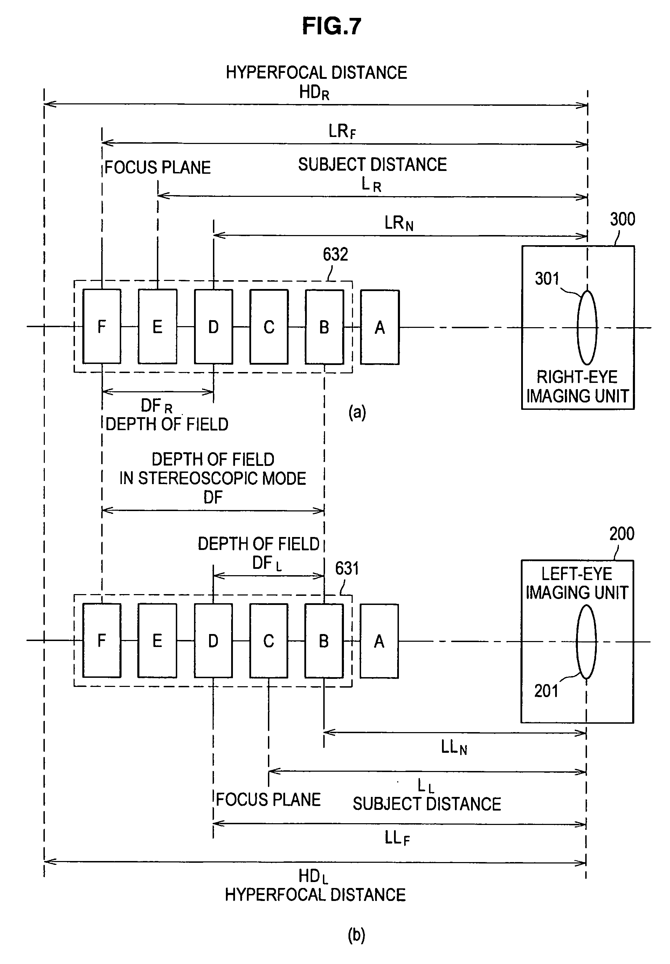

The left-eye button 501 and the right-eye button 502 are buttons pressed for setting a lens used as a reference lens at the time of focus control. For example, the reference lens can be set by performing an operation of pressing a desired button on the input/output panel 190 configured with a touch panel. For example, when the user's dominant eye is the left eye, the left-eye button 501 is pressed, whereas when the user's dominant eye is the right eye, the right-eye button 502 is pressed. The reference lens will be described in detail with reference to Fig. 7.

In this example, the reference lens is set by selecting the user's dominant eye, however, the reference lens may be set according to the user's preference.

Further, when the still image imaging mode is set, the user may set a desired reference lens while viewing an image (a monitoring image) displayed on the input/output panel 190 in a standby state for still image recording. In this case, for example, buttons may be arranged on the monitoring image in a superimposed manner, and thus the user can easily perform the setting operation while viewing the monitoring image.

The OK button 503 is a button pressed to decide on a selection made when the pressing operation of selecting the dominant eye is performed. Further, information (reference lens information) related to the reference lens decided by the pressing operation of the OK button 503 is held in the stereoscopic image imaging condition holding unit 122. For example, the return button 504 is a button pressed to return to a previously displayed display screen.

A setting screen 510 illustrated in Fig. 4B is a screen, displayed on the input/output panel 190, for setting either a far point or a near point as the depth of field of the other lens with respect to the depth of field of the reference lens when focus control is performed by the focus control unit 123. For example, the setting screen 510 is displayed directly after the OK button 503 is pressed on the setting screen 500 illustrated in Fig. 4A. The setting screen 510 is provided with a far point button 511, a near point button 512, an OK button 513, and a return button 514.

The far point button 511 and the near point button 512 are buttons pressed to set either the far point or the near point as the depth of field of the other lens with respect to the depth of field of the reference lens. For example, the depth of field of the other lens can be selected by performing an operation of pressing a desired button on the input/output panel 190. How to set the far point or the near point will be described in detail with reference to Fig. 7.

In this example, the far point or the near point is set as the depth of field of the other lens with respect to the depth of field of the reference lens by the user's operation, however, the far point or the near point may be set in advance.

For example, it may be automatically set during an imaging operation based on a criterion for determining whether a main subject is present at the far point or the near point. For example, when the main subject is a human face, a human face included in an imaged image generated by either of the left-eye imaging unit 200 and the right-eye imaging unit 300 is detected, and a subject distance of the detected face is calculated (for example, see Formula 2). Then, when the subject distance of the detected face is at the far point side farther than the focus position of the reference lens, the far point is set as the depth of field of the other lens. However, when the subject distance of the detected face is at the near point side farther than the focus position of the reference lens, the near point is set as the depth of field of the other lens. Further, as a method of detecting a specific object (for example, a human face) included in an imaged image, for example, a detecting method using matching between a template in which brightness distribution information of a specific object is recorded and a content image (for example, JP2004-133637A) may be used. Further, when the specific object is a human face, a method of detecting a face based on a portion of a flesh color included in an imaged image or a feature quantity of a human face may be used.

Further, when the still image imaging mode is set, the user may set either the far point or the near point while viewing an image (monitoring image) displayed on the input/output panel 190 in a standby state for still image recording. In this case, buttons may be arranged on the monitoring image in a superimposed manner, and thus the user can easily perform the setting operation while viewing the monitoring image.

The OK button 513 is a button pressed to decide on a selection made when the pressing operation of selecting the far point or the near point is performed. Further, information (far point/near point information) related to the far point or the near point decided by the pressing operation of the OK button 513 is held in the stereoscopic image imaging condition holding unit 122. For example, the return button 514 is a button pressed to return to an immediately previous display screen.

That is, the operation receiving unit 110 receives a selection operation of selecting whether a second subject is a subject present at the imaging device 100 side farther than a first subject in the optical axis direction or a subject present at a side farther than the first subject in the optical axis direction. The first subject is a subject which is a focus target of the reference lens, and the second subject is a subject which is a focus target of the other lens.

A setting screen 515 illustrated in Fig. 5A is a screen, displayed on the input/output panel 190, for setting an overlap rate of a range of the depth of field of the other lens with respect to a range of the depth of field of the reference lens when focus control is performed by the focus control unit 123. For example, the setting screen 515 is displayed directly after the OK button 513 is pressed on the setting screen 510. The setting screen 515 is provided with an overlap rate setting bar 516, an overlap rate designating position 517, an OK button 518, and a return button 519.

The overlap rate setting bar 516 is a bar used to set an overlap rate of the range of the depth of field of the other lens with respect to the range of the depth of field of the reference lens, and the overlap rate designating position 517 is displayed in a superimposed manner. For example, the overlap rate of the range of the depth of field of the other lens with respect to the range of the depth of field of the reference lens may be set such that the user moves the overlap rate setting bar 516 to the position of a desired overlap rate in the overlap rate setting bar 516. For example, when the overlap rate is set to 0%, the depth of field of the other lens is set so that the range of the depth of field of the reference lens does not overlap the range of the depth of field of the other lens, and so the two ranges are continuous to each other. For example, however, when the overlap rate is set to 100%, the depth of field of the other lens is set so that the range of the depth of field of the reference lens can completely overlap the range of the depth of field of the other lens. In this case, the focus position of the reference lens is identical to the focus position of the other lens. The overlap rate will be described in detail with reference to Fig. 7.

In this example, the overlap rate of the range of the depth of field of the other lens with respect to the range of the depth of field of the reference lens is set by the user's operation, however, the overlap rate may be set in advance. For example, the overlap rate may be set as 0%, 10% to 20%, or the like.

When the still image imaging mode is set, the user may set the overlap rate while viewing an image (monitoring image) displayed on the input/output panel 190 in a standby state for still image recording. For example, in this case, the overlap rate setting bar 516 and buttons may be arranged on the monitoring image in a superimposed manner, and thus the user can easily perform the setting operation while viewing the monitoring image.

The OK button 518 is a button pressed to decide on a designation made when the designating operation of designating the overlap rate is performed. Further, information (overlap rate information) related to the overlap rate decided by the pressing operation of the OK button 518 is held in the stereoscopic image imaging condition holding unit 122. For example, the return button 519 is a button pressed to return to an immediately previous display screen.

Fig. 5B illustrates an example of the content held in the stereoscopic image imaging condition holding unit 122. The stereoscopic image imaging condition holding unit 122 holds setting information for setting various imaging conditions of the stereoscopic image imaging mode, and setting information 126 is held for each setting item 125.

The setting item 125 includes items which are targets of the user's setting operation on the setting screens 500, 510, and 515 illustrated in Figs. 4A, 4B, and 5A. The setting information 126 includes setting information set by the user's setting operation on the setting screens 500, 510, and 515 illustrated in Figs. 4A, 4B, and 5A.

In the example illustrated in Fig. 5B, "left (left eye)" is set as the reference lens by the setting operation in the setting screen 500, and "far point" is set as the depth of field of the other lens with respect to the depth of field of the reference lens by the setting operation in the setting screen 510. Further, in the example illustrated in Fig. 5B, "0%" is set as the overlap rate of the depth of field by the setting operation in the setting screen 515.

[Example of Relation Between Permissible Circle of Confusion and Depth of Field]

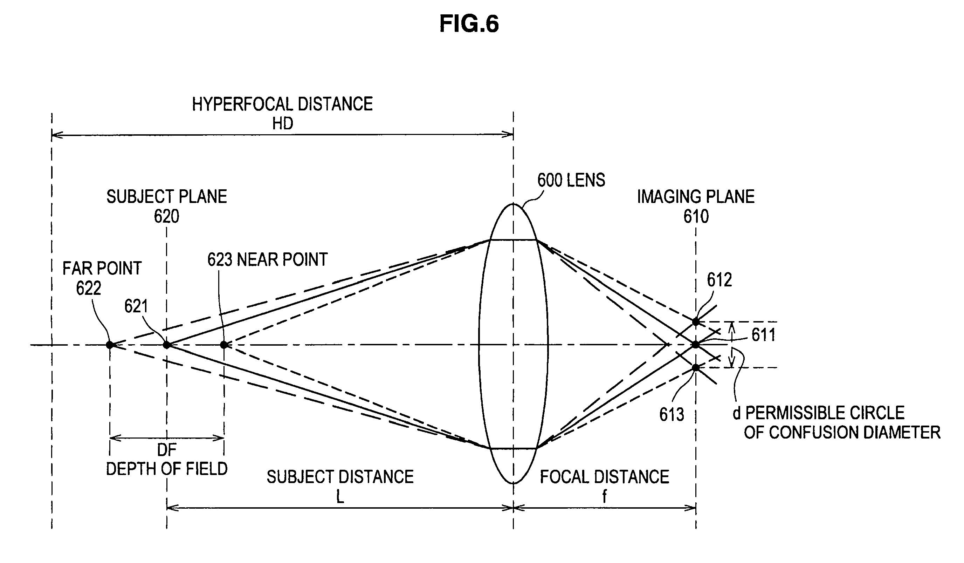

Fig. 6 is a diagram schematically illustrating a relation among a permissible circle of confusion of the imaging elements 250 and 350, lenses configuring an optical system, and the depth of field according to the first embodiment of the present disclosure. In Fig. 6, a lens 600 is schematically illustrated as each of lenses configuring the optical system.

Light from a subject is incident to the lens 600. An imaging plane 610 is illustrated as a light receiving plane of an imaging element (the imaging elements 250 and 350) that receives incident light from the lens 600.

Generally, a maximum focus diameter that is allowable by an imaging device is decided based on the size of an imaging element, the number of pixels, and a filter type, and the like. Generally, the focus diameter is called a permissible circle of confusion diameter. For example, the permissible circle of confusion diameter is set to about 0.03 mm for a 35-mm silver halide camera size and is set to about 0.02 mm in an advanced photo system (APS)-C. Within the permissible circle of confusion diameter, even an image imaged at a deviated focus looks focused when the image is reproduced.

Here, a plane including a position 621 of a subject (a focused subject) corresponding to a state in which a spot 611 whose image is formed on an imaging plane 610 becomes a minimum as illustrated in Fig. 6 is referred to as a subject plane 620. In this case, a focus deviation range DF (a near point 623 and a far point 622) that is allowable until image formation of a permissible circle of confusion diameter d (positions 612 and 613 on the imaging plane 610) is generated from the subject plane 620 to the near point side and the far point side. The range DF is generally referred to as a depth of field.

In imaging devices, generally, when a distance from an imaging device to a subject is a predetermined distance or more, a distance HD (within the permissible circle of confusion diameter d) in which a focus is made up to infinity is present. The distance HD is generally referred to as a hyperfocal distance. The hyperfocal distance HD is a value which is unambiguously decided by the focal distance of a lens, the permissible circle of confusion diameter and a diaphragm of a lens (an F value (F No.)). Specifically, the hyperfocal distance HD may be calculated using Formula 1:

$$HD = f^2/d \times F, \quad \ldots \text{Formula 1}$$

where f is a value representing a focal distance of a lens, d is a value representing the permissible circle of confusion diameter, and F is an F value.

Here, when a subject farther than the hyperfocal distance HD is set as an imaging target, since the subject is present between the hyperfocal distance HD and infinity, it is estimated that the subject is in focus. However, when a subject present at the imaging device 100 side farther than the hyperfocal distance is set as an imaging target, it is supposed that a focused subject and an unfocused subject are present. Here, when a stereoscopic image is captured, a plurality of images including substantially the same subject are generated using two optical systems. Thus, by setting depths of field for imaging the plurality of images to different ranges, images including substantially the same subject can be generated at the depth of a subject deeper than a depth of field for imaging a single image.

However, as described above, when two images (the left-eye image and the right-eye image) for displaying a stereoscopic image are imaged, focused subjects and unfocused subjects among subjects included in the two images are different from each other. However, a stereoscopic image is an image which is stereoscopically shown to the user using an illusion caused by parallax between the left eye and the right eye. Thus, it is supposed that when at least one of the two images is in focus, the images can be recognized as a stereoscopic image, and influence on the user is small.

[Depth of Field Setting Example]

Fig. 7 is diagrams schematically illustrating a relation between a depth of field set by the focus control unit 123 and a subject according to the first embodiment of the present disclosure. Fig. 7A illustrates an example in which a relation between the right-eye imaging unit 300 included in the imaging device 100 and objects A to F which are imaging targets of the right-eye imaging unit 300 is seen from above. Fig. 7B illustrates an example in which a relation between the left-eye imaging unit 200 included in the imaging device 100 and the objects A to F which are imaging targets of the left-eye imaging unit 200 is seen from above. The objects A to F are objects arranged at substantially regular intervals in the optical axis direction of the imaging device 100. In Fig. 7, a lens 201 is schematically illustrated as each of lenses configuring the left-eye imaging unit 200, and a lens 301 is schematically illustrated as each of lenses configuring the right-eye imaging unit 300.

Here, in the first embodiment of the present disclosure, either of the left-eye imaging unit 200 and the right-eye imaging unit 300 is set as a reference (reference lens). In Fig. 7, the left-eye imaging unit 200 is set as the reference. Further, Fig. 7 illustrates an example in which the range of the depth of field of the right-eye imaging unit 300 is set to be at a side father than the range of the depth of field of the left-eye imaging unit 200. Further, Figs. 7A and 7B illustrate an example in which the overlap rate of the range of the depth of field of the right-eye imaging unit 300 with respect to the range of the depth of field of the left-eye imaging unit 200 is set to 0%. That is, Fig. 7 illustrates an example in which the content of the setting information 126 illustrated in Fig. 5B is held in the stereoscopic image imaging condition holding unit 122.

Further, as described above, a subject present between the hyperfocal distance and infinity is in focus. For this reason, when a subject which is a focus target of the imaging unit 101 is present within the range of the hyperfocal distance, the focus control unit 123 synchronizes the focus lenses 213 and 313 with each other and then performs focus control. In the example illustrated in Fig. 7, a subject which is present at the imaging device 100 side farther than the hyperfocal distance is mainly set as an imaging subject.

Here, the object C among the objects A to F is set as a focus target subject of the left-eye imaging unit 200. For example, a subject included in a specific area in an imaged image generated by the left-eye imaging unit 200 may be set as the focus target subject (object C). For example, an area positioned at a central portion of the imaged image may be set as the specific area in the imaged image. For example, the specific area in the imaged image may be set by the user's operation (for example, a touch operation on the input/output panel 190). Further, for example, the imaging device 100 may be provided with a specific object detecting unit that detects a specific object, and when the specific object is detected by the specific object detecting unit, the position of the detected specific object in the imaged image may be set as the specific area. For example, the imaging device 100 may be provided with a face detecting unit as the specific object detecting unit, and when a human face is detected from an imaged image, the position of the detected face in the imaged image may be set as the specific area. The above described face detecting method may be used as a face detecting method.

Here, a hyperfocal distance $HD_L$ of the left-eye imaging unit 200 illustrated in Fig. 7B may be calculated using Formula 1. That is, the hyperfocal distance $HD_L$ may be calculated by the following Formula:

$$HD_L = f^2/d \times F,$$

where f, d, and F are the same as in Formula 1.

Here, when a distance (subject distance) to the focus target subject (object C) of the left-eye imaging unit 200 is $L_L$, a distance from the lens 201 to an image formed on the imaging element 250 is b, and a focal distance of the lens is f, the following Formula 2 is derived:

$$(1/L_L) + (1/b) = 1/f \quad \dots \text{Formula 2}$$

The subject distance $L_L$ $(=1/((1/f)-(1/b)))$ can be calculated according to Formula 2.

Subsequently, a distance $LL_F$ farthest from the imaging device 100 within a focused range at the far point side of the depth of field is calculated using the subject distance $L_L$. The distance $LL_F$ can be calculated using Formula 3 (see "Photography Terms Dictionary" written by Ueno Chizuko, et al., Nippon Camera Co., Ltd., October 15, 1991, p. 193 to 195).

$$LL_F = HD_L \times L_L/(HD_L - L_L) \quad \dots \text{Formula 3}$$

Here, it is assumed that the depth of field of the left-eye imaging unit 200 at least partially overlaps the depth of field of the right-eye imaging unit 300. In this case, a distance $LR_N$ nearest from the imaging device 100 within a focused range at the near point side of the depth of field of the right-eye imaging unit 300 needs to be shorter than the distance $LL_F$ calculated in Formula 3. That is, the distance LRN needs to satisfy the following Formula 4.

$$LR_N \quad LL_F \quad \dots \text{Formula 4}$$

Further, it is assumed that a distance (subject distance) to a focus target subject of the right-eye imaging unit 300 is $L_R$ as illustrated in Fig. 7A. In this case, the distance $LR_N$ nearest from the imaging device 100 within a focused range at the near point side of the depth of field can be calculated using subject distance $L_R$. That is, the distance $LR_N$ can be calculated using the following Formula 5 (see the literature mentioned for Formula 3).

$$LR_N = HD_R \times L_R/(HD_R + L_R) \quad \dots \text{Formula 5}$$

Further, $HD_R = HD_L (= f^2/d \times F)$.

In this example, as described above, the overlap rate of the range of the depth of field of the right-eye imaging unit 300 with respect to the range of the depth of field of the left-eye imaging unit 200 is set to 0%. Thus, a maximum value among the distances $LR_N$ that satisfy a relation of Formula 4 is used (that is, $LR_N=LL_F$). In this case, when $LR_N=LL_F$ and $HD_R=HD_L$ are substituted into Formula 5, the following Formula 6 is obtained.

$$LL_F=HD_L\times L_R/(HD_L+L_R) \quad \dots \text{Formula 6}$$

The distance (subject distance) $L_R$ to the focus target subject of the right-eye imaging unit 300 can be calculated by transforming Formula 6. That is, the subject distance $L_R$ can be calculated using Formula 7.

$$L_R=HD_L\times LL_F/(HD_L-LL_F) \quad \dots \text{Formula 7}$$

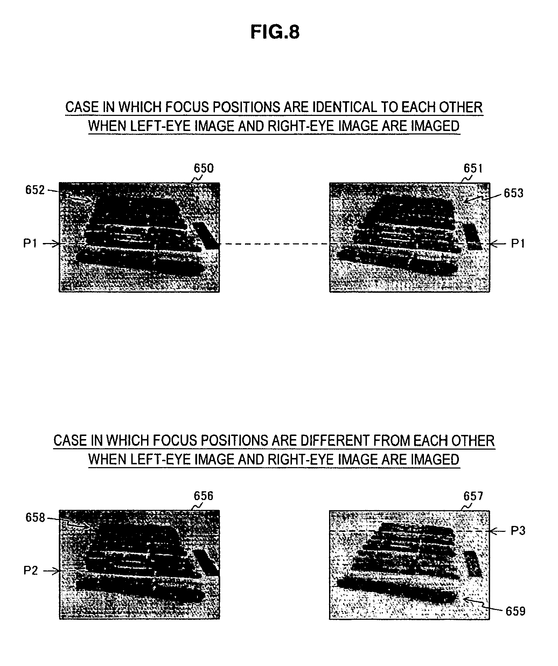

As described above, the position of the focus lens 313 included in the right-eye imaging unit 300 is moved so that the subject distance $L_R$ calculated using Formula 7 can be focused. Here, when the position of the focus lens 313 is moved so that the subject distance $L_R$ can be focused, a characteristic curve representing a relation between a distance (focal distance) between the imaging device 100 and a subject when the subject is in focus and the position of the focus lens is used. The characteristic curve is a curve that is decided corresponding to the position of the zoom lens in view of an error (for example, see JP2009-115981 A (Fig. 8)).

As described above, the focus control unit 123 performs focus control using the focus lens 313 so that the object E included in a range different from the range of a depth of field $DF_L$ specified by the position (subject distance) of the object C, the F value, and the focal distance of the lens can be in focus. By performing focus control using the focus lens 313, as illustrated in Fig. 7, a depth of field $DF_R$ of the right-eye imaging unit 300 is at a side farther than the depth of field $DF_L$ of the left-eye imaging unit 200, and so both depths of field become continuous to each other. In this case, a depth of field DF obtained by combining the depth of field of the left-eye imaging unit 200 with the depth of field of the right-eye imaging unit 300 corresponds to a depth of field of images generated by the left-eye imaging unit 200 and the right-eye imaging unit 300.

For example, when the images (the left-eye image and the right-eye image) generated by the left-eye imaging unit 200 and the right-eye imaging unit 300 are displayed as a stereoscopic image, a subject included in the depth of field DF can be viewed in a focused state. That is, the image can be viewed in a state in which subjects included in rectangles 631 and 632 are in focus. By performing focus control as described above, a stereoscopic image in which subjects included in a relatively broad range can be appropriately stereoscopically viewed even under an imaging condition in which the depth of field is relatively shallow can be generated. By displaying the stereoscopic image generated as described above, the user can naturally view the stereoscopic image.

Fig. 7 illustrates an example in which the position of the far point of the depth of field of the left-eye imaging unit 200 is identical to the position of the near point of the depth of field of the right-eye imaging unit 300, and so the depths of field are continuous to each other (an example in which the overlap rate is set to 0%). However, the focus position of the right-eye imaging unit 300 may be set so that the ranges of the depths of field overlap each other according to the overlap rate set on the setting screen 515 illustrated in Fig. 5A. For example, when an overlap rate RR1 (here, 0 (%)<RR1<100(%)) is set, the subject distance $L_R$ is calculated so that the overlap rate between the depth of field $DF_R$ and the depth of field $DF_L$ can be the set value (or can be included within a certain range including the value).

Further, Fig. 7 illustrates an example in which the left-eye imaging unit 200 is used as the reference, and the range of the depth of field of the right-eye imaging unit 300 is set to be at a side farther than the range of the depth of field of the left-eye imaging unit 200. In the following, an example in which the left-eye imaging unit 200 is used as the reference, and the range of the depth of field of the right-eye imaging unit 300 is set to be at the imaging device 100 side farther than the range of the depth of field of the left-eye imaging unit 200 is illustrated. In this case, a distance $LL_N$ nearest to the imaging device 100 within a focused range at the near point side of the depth of field is calculated using the subject distance $L_L$. The distance $LL_N$ can be calculated using the following Formula 8 (see the literature mentioned for Formula 3).

$$LL_N=HD_L\times L_L/(HD_L+L_L) \quad \dots \text{Formula 8}$$

Formula 8 is derived by changing a denominator of Formula 3 from "negative (-)" to "positive (+)".

Further, a distance (subject distance) $L1_R$ (not shown) to the focus target subject of the right-eye imaging unit 300 can be calculated using Formula 9:

$$L1_R = HD_L \times LL_N / (HD_L + LL_N) \qquad \ldots \text{Formula 9}$$

Formula 9 is derived by changing a denominator of Formula 7 from "negative (-)" to "positive (+)".

As described above, the distance (subject distance) $L1_R$ to the focus target subject of the right-eye imaging unit 300 is calculated according to the setting information held in the stereoscopic image imaging condition holding unit 122. Further, the focus position of the right-eye imaging unit 300 may be set so that the ranges of the depths of fields can overlap according to the overlap rate set on the setting screen 515 illustrated in Fig. 5A.

Further, when the focal distance of the lens is changed by a zoom operation in the imaging device 100, the focus position of each imaging unit is appropriately calculated according to the change.

[Stereoscopic Image Example]

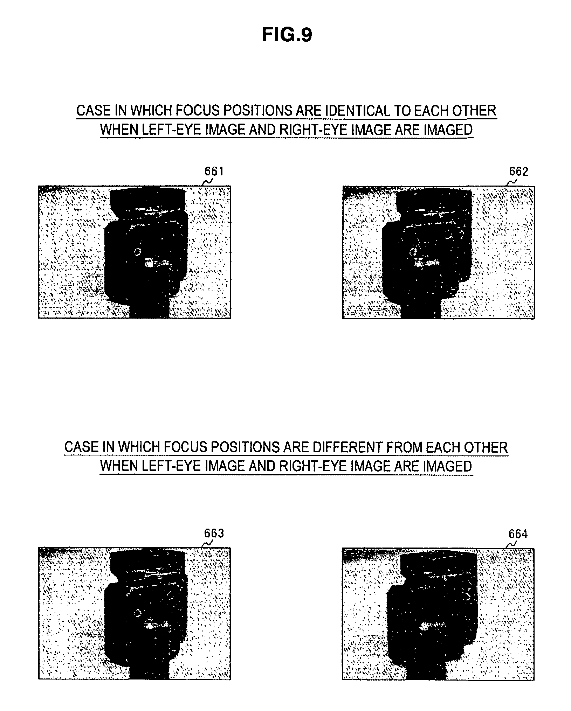

Figs. 8 and 9 illustrate examples of a set of images (still images) respectively generated by the left-eye imaging unit 200 and the right-eye imaging unit 300 according to the first embodiment of the present disclosure. Fig. 8 illustrates an example of a set of images generated when an imaging operation has been performed using a plurality of pens arranged in an infinite direction from near the imaging device 100 as subjects.

In an upper drawing of Fig. 8, a set of images (a left-eye image 650 and a right-eye image 651) respectively generated by the left-eye imaging unit 200 and the right-eye imaging unit 300 are arranged on the left and right. The left-eye image 650 and the right-eye image 651 are a set of images for displaying a stereoscopic image and are examples of a case in which focus positions are set to be identical to each other when an imaging operation is performed by the left-eye imaging unit 200 and the right-eye imaging unit 300. Further, in the upper drawing of Fig. 8, a dotted line P1 is schematically illustrated as a focus position when the left-eye image 650 and the right-eye image 651 are imaged. That is, in the example illustrated in the upper drawing of Fig. 8, the pens overlapping the dotted line P1 representing the focus position are in focus in both the left-eye image 650 and the right-eye image 651. Subjects near the pens overlapping the dotted line P1 representing the focus position are also in focus. That is, subjects included in the depth of field based on the dotted line P1 representing the focus position are in focus.

As described above, in both the left-eye image 650 and the right-eye image 651, when substantially the same subject is in focus, a subject relatively distant from the focused subject is out of focus and thus looks blurred. That is, a subject which is not included in the depth of field based on the dotted line P1 representing the focus position looks blurred. For example, pens (indicated by arrows 652 and 653), at the rear side, included in the left-eye image 650 and the right-eye image 651 look blurred.

Further, since the focus position of the left-eye image 650 is substantially the same as the focus position of the right-eye image 651, focused subjects and unfocused subjects are substantially the same. Thus, although in a stereoscopic image displayed using the left-eye image 650 and the right-eye image 651, a subject corresponding to the focus position and subjects around the subject are in focus, the other subjects are out of focus.

As described above, when the stereoscopic image is displayed using the left-eye image 650 and the right-eye image 651, the focused subject (the pen overlapping the dotted line P1) can be relatively clearly viewed. However, the subjects (for example, the pens, at the rear side, indicated by arrows 652 and 653) relatively distant from the focused subject are out of focus and look blurred. Thus, it is supposed that a stereoscopic image corresponding to the left-eye image 650 and the right-eye image 651 is shown to the user as a restrictive stereoscopic image compared to when viewed with the naked eye, and thus the user may feel uncomfortable.

In a lower drawing of Fig. 8, a set of images (a left-eye image 656 and a right-eye image 657) respectively generated by the left-eye imaging unit 200 and the right-eye imaging unit 300 are arranged on the left and right. The left-eye image 656 and the right-eye image 657 are a set of images for displaying a stereoscopic image and are examples of a case in which focus positions are set to be different from each other when an imaging operation is performed by the left-eye imaging unit 200 and the right-eye imaging unit 300. Further, in the lower drawing of Fig. 8, dotted lines P2 and P3 are schematically illustrated as focus positions when the left-eye image 656 and the right-eye image 657 are imaged. That is, in the example illustrated in the lower drawing of Fig. 8, the pens overlapping the dotted line P2 representing the focus position are in focus in the left-eye image 656. The pens overlapping the dotted line P3 representing the focus position are in focus in the right-eye image 657. That is, the left-eye image 656 and the right-eye image 657 are images which are imaged in a state in which both depths of field are deviated from each other to cause the depths of fields to at least partially overlap each other when the imaging operation is performed.

As described above, when a focused subject in the left-eye image 656 is different from a focused subject in the right-eye image 657, a subject which is relatively distant in the optical axis direction is in focus in at least one imaged image. For example, pens at the front side and pens near the pens are in focus in the left-eye image 656. Pens at the rear side and pens near the pens are in focus in the right-eye image 657.

That is, in the left-eye image 656, a subject, at the front side, included in the depth of field based on the dotted line P2 is in focus, but a subject (indicated by an arrow 658), at the rear side, not included in the depth of field based on the dotted line P2 looks blurred. On the other hand, in the right-eye image 657, a subject, at the rear side, included in the depth of field based on the dotted line P3 is in focus, but a subject (indicated by an arrow 659), at the front side, not included in the depth of field based on the dotted line P3 looks blurred.

As described above, when two images (the left-eye image 656 and the right-eye image 657) for displaying a stereoscopic image are imaged, a relatively deep depth of field (a range obtained by combining the two depths of field) can be set for the two images. Here, focused subjects and unfocused subjects among subjects included in the two images are different. However, as described above, a stereoscopic image is an image which is stereoscopically shown to the user using an illusion caused by parallax between the left eye and the right eye. Thus, it is supposed that when at least one of the two images is in focus, the images can be recognized as a stereoscopic image, and influence on the user is small. Thus, when a stereoscopic image is displayed using the left-eye image 656 and the right-eye image 657, a subject which is relatively distant in the optical axis direction can be also relatively clearly viewed in the stereoscopic image. For example, when the user is viewing an object (for example, a plurality of pens) while changing his or her focus from the front to the rear, the subject is in focus according to the change, and thus the stereoscopic image can be relatively clearly viewed.

Fig. 9 illustrates an example of a set of images generated when an imaging operation has been performed using a plurality of mold members arranged in an infinite direction from near the imaging device 100 as a subject.

In an upper drawing of Fig. 9, a set of images (a left-eye image 661 and a right-eye image 661) respectively generated by the left-eye imaging unit 200 and the right-eye imaging unit 300 are arranged on the left and right. The left-eye image 661 and the right-eye image 662 are examples of a case in which focus positions are set to be identical to each other when an imaging operation is performed by the left-eye imaging unit 200 and the right-eye imaging unit 300.

As described above, in both the left-eye image 661 and the right-eye image 662, when substantially the same subject is in focus, a subject relatively distant from the focused subject is out of focus and thus looks blurred. That is, a subject which is not included in the depth of field based on the focus position looks blurred. For example, the mold member at the front side and the mold member at the rear side, which are included in the left-eye image 661 and the right-eye image 662, look blurred. In this case, similarly to the example illustrated in the upper drawing of Fig. 8, it is supposed that a stereoscopic image corresponding to the left-eye image 661 and the right-eye image 662 is shown to the user as a restrictive stereoscopic image compared to when viewed with the naked eye, and thus the user may feel uncomfortable.

In a lower drawing of Fig. 9, a set of images (a left-eye image 663 and a right-eye image 664) respectively generated by the left-eye imaging unit 200 and the right-eye imaging unit 300 are arranged. The left-eye image 663 and the right-eye image 664 are examples of a case in which focus positions are set to be different from each other when an imaging operation is performed by the left-eye imaging unit 200 and the right-eye imaging unit 300.

As described above, when a focused subject in the left-eye image 663 is different from a focused subject in the right-eye image 663, a subject which is relatively distant in the optical axis direction is in focus in at least one imaged image. For example, the mold member at the front side is in focus in the left-eye image 663. The mold member at the rear side is in focus in the right-eye image 664. Further, in the left-eye image 663 and the right-eye image 664, the focused subjects are continuous to each other. Thus, similarly to the example illustrated in the lower drawing of Fig. 8, when a stereoscopic image is displayed using the left-eye image 656 and the right-eye image 657, a subject which is relatively distant in the optical axis direction can also be relatively clearly viewed in the stereoscopic image.

[Operation example of Imaging Device]

Next, an operation of the imaging device 100 according to the first embodiment of the present disclosure will be described with the accompanying drawings.

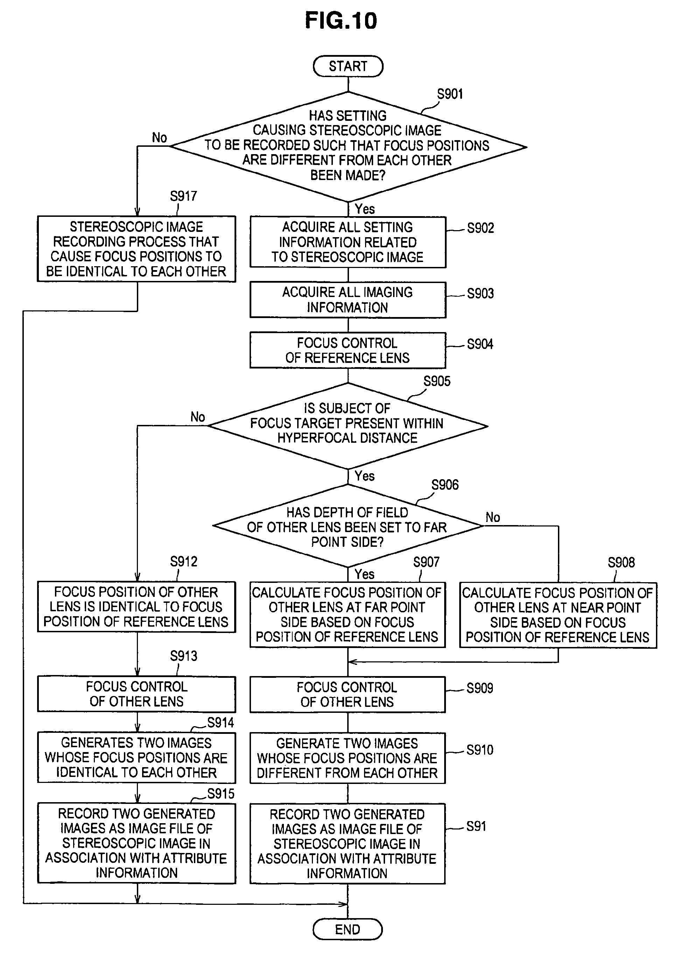

Fig. 10 is a flowchart illustrating an example of a processing procedure of a focus control process by the imaging device 100 according to the first embodiment of the present disclosure. This example represents the focus control process when the still image recording instructing operation is performed in a state in which the still image imaging mode is set.

First, the user fully presses the shutter button 111. When the shutter button 111 is fully pressed as described above, it is determined whether or not a setting causing a stereoscopic image to be recorded such that the focus positions of two imaging units are different from each other has been made (step S901). It is assumed that this setting has been made by the user operation in advance. When it is determined that the setting causing a stereoscopic image to be recorded such that the focus positions of two imaging units are different from each other has not been made (step S901), a stereoscopic image recording process is performed (step S917). The stereoscopic image recording process is a process of generating a stereoscopic image such that the focus positions of the two imaging units are identical to each other and then recording the generated stereoscopic image.

When it is determined that the setting causing a stereoscopic image to be recorded such that the focus positions of two imaging units are different from each other has been made (step S901), the focus control unit 123 acquires all setting information related to a stereoscopic image from the stereoscopic image imaging condition holding unit 122 (step S902). Subsequently, the focus control unit 123 acquires all imaging information (a focal distance of a reference lens, an F value, and the like) from the imaging unit 101 (step S903). Then, the focus control unit 123 performs focus control, in an imaging unit, set to the reference lens (step S904). That is, focus control is performed so that a subject (a first subject) included in a specific area in an imaged image can be in focus. Step S904 is an example of a first control procedure stated in claims.

Subsequently, the focus control unit 123 determines whether or not a subject that becomes a focus target by focus control, in the imaging unit, set to the reference lens is present within a hyperfocal distance (step S905). When it is determined that the subject of the focus target is not present within the hyperfocal distance (step S905), the focus control unit 123 determines whether or not the far point side has been set as the depth of field of the other lens (step S906).

When it is determined that the far point side has been set as the depth of field of the other lens (step S906), the focus control unit 123 calculates a focus position at the far point side of the other lens based on a focus position of the reference lens (step S907), and then the process proceeds to step S909. However, when it is determined that the far point side has not been set as the depth of field of the other lens (step S906), the focus control unit 123 calculates a focus position at the near point side of the other lens based on the focus position of the reference lens (step S908), and then the process proceeds to step S909. Subsequently, the focus control unit 123 performs focus control, in the imaging unit, corresponding to the other lens based on the calculated focus position (step S909). That is, focus control is performed so that another subject (a second subject), which is present at a different position from the first subject in the optical axis direction among subjects included in an imaged image, can be in focus. Steps S906 and S909 are examples of a second control procedure stated in the claims.

Subsequently, the imaging unit 101 generates two images (a left-eye image and a right-eye image) whose focus positions are different from each other (step S910). Further, it is assumed that even when focus control is being performed, an operation of generating an imaged image is being performed by the imaging unit 101. Step S910 is an example of an imaging procedure stated in the claims.

Subsequently, the recording control unit 150 causes the two generated images (the left-eye image and the right-eye image) to be recorded in the content storage unit 160 as a an image file of a stereoscopic image in association with respective attribute information (step S911). Here, the respective attribute information includes information representing that the two images (the left-eye image and the right-eye image) configuring the stereoscopic image have been generated at different focus positions.

When it is determined that the subject that becomes the focus target by focus control, in the imaging unit, set to the reference lens is present within a hyperfocal distance (step S905), it is determined that the focus position of the reference lens is identical to the focus position of the other lens (step S912). Subsequently, the focus control unit 123 performs focus control, in the imaging unit, set to the other lens based on the focus position of the reference lens (step S913). Subsequently, the imaging unit 101 generates two images (the left-eye image and the right-eye image) whose focus positions are identical to each other (step S914).

Subsequently, the recording control unit 150 causes the two generated images (the left-eye image and the right-eye image) to be recorded in the content storage unit 160 as a an image file of a stereoscopic image in association with respective attribute information representing this fact (step S911).

This example represents focus control when the still image recording instructing operation is performed in a state in which the still image imaging mode is set, however, this example can be applied to a focus control process during the moving image recording operation. For example, focus control in two imaging units is performed on frames configuring a moving image and frames of regular intervals during the moving image recording operation.

[Focus Control Example Using Focus Position Table]

In the above description, in the left-eye imaging unit 200 and the right-eye imaging unit 300, the focus position of the other imaging unit is calculated based on the focus position of one imaging unit set as a reference. For example, however, when a certain imaging condition is set, it is assumed that a relation between the focus position of the imaging unit set as the reference and the focus position of the other imaging unit has constant regularity. In this regard, in the following, an example in which a relation between the focus position of the imaging unit set as the reference and the focus position of the other imaging unit is held in a table, and the focus position of the other imaging unit is decided based on the held content is illustrated.

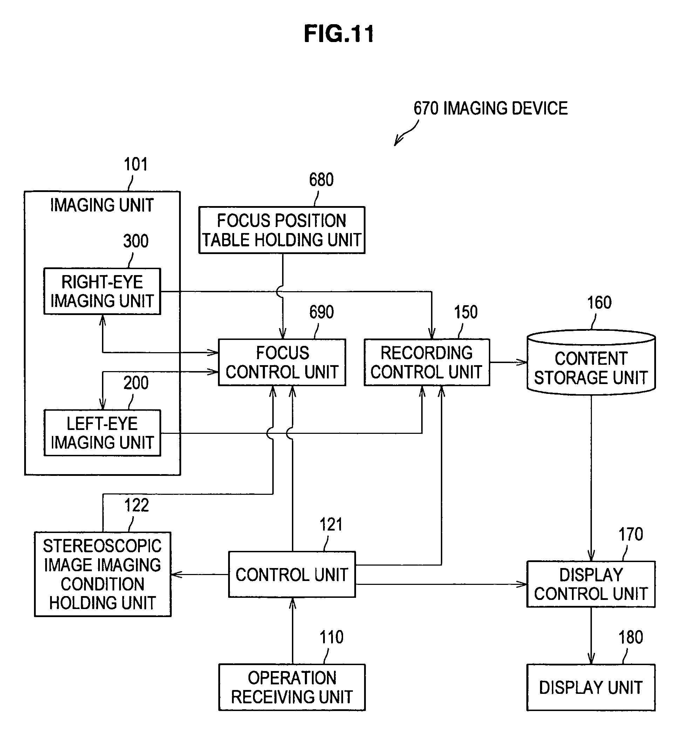

Fig. 11 is a block diagram illustrating a functional configuration example of an imaging device 670 according to the first embodiment of the present disclosure. The imaging device 670 is configured such that the imaging device 100 illustrated in Fig. 3 is provided with a focus control unit 690 instead of the focus control unit 123 and further includes a focus position table holding unit 680. Since the other configuration is substantially the same as the imaging device 100, the same components are denoted by the same reference numerals, and a description thereof will be partially omitted.

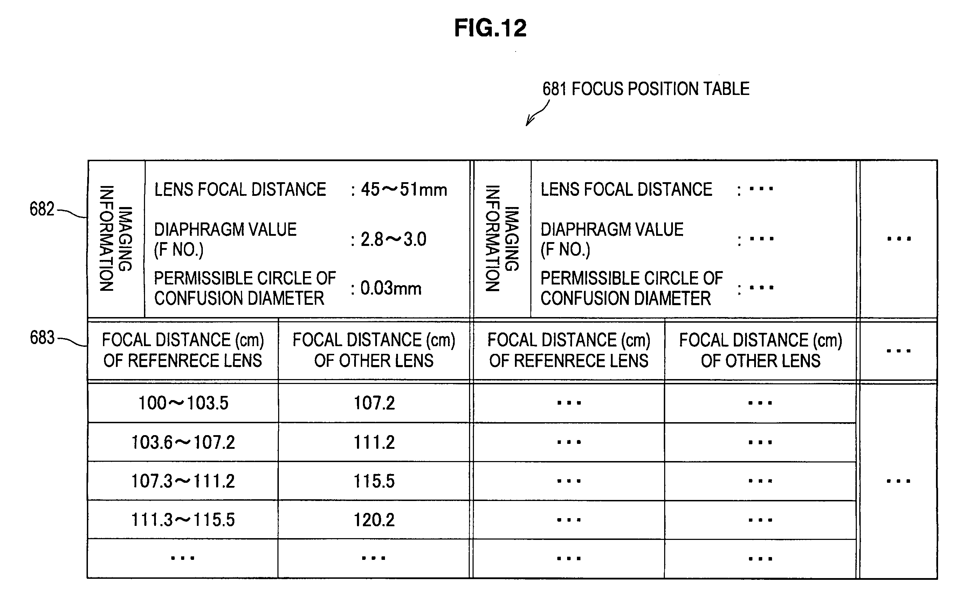

The focus position table holding unit 680 is a table that holds a relation between a focus position of one imaging unit and a focus position of the other imaging unit for each imaging condition set to the imaging device 670. The focus position table holding unit 680 supplies the focus control unit 690 with the held table content. The table content held in the focus position table holding unit 680 will be described in detail with reference to Fig. 12.

The focus control unit 690 acquires the focus position of the other imaging unit associated with the focus position of one imaging unit from the focus position table holding unit 680, and performs focus control of the other imaging unit based on the acquired focus position of the other imaging unit.

[Example of Content Held in Table]

Fig. 12 is a diagram illustrating an example of a focus position table held in the focus position table holding unit 680 according to the first embodiment of the present disclosure. A focus position table 681 illustrated in Fig. 12 is a table in which imaging information 682 of the imaging device 100 is held in association with a relation 683 between a focus position of one imaging unit and a focus position of the other imaging unit. Fig. 12 illustrates an example of a focus position table in which the "far point" is set as the depth of field of the other lens with respect to the depth of field of the reference lens, and the overlap rate of the depth of field is set to "0%."

For example, a case in which a lens focal distance is set to "45 to 51 mm," a diaphragm value (F No.) is set to "2.8 to 3.0," and a permissible circle of confusion diameter is set to "0.03 mm" is assumed as an imaging condition when an imaging operation is performed using the imaging device 100. In the case in which this imaging condition is set, when the focus position of the imaging unit set as the reference (the focal distance of the reference lens) is decided to be 100 to 103.5 cm, the focus position of the other imaging unit (the focal distance of the other lens) may be decided to be 107.2 cm. Similarly, when the focus position of the imaging unit set as the reference is decided to be 103.6 to 107.2 cm, the focus position of the other imaging unit may be decided to be 111.2 cm.

As described above, the focus control unit 690 holds the focus position table 681 in the imaging device 670 and can decide the focus position of the other imaging unit based on the focus position of the imaging unit set as the reference using the focus position table 681. Thus, since it is not necessary to sequentially calculate the focus position of the other imaging unit based on the focus position of the imaging unit set as the reference during the imaging operation, a load related to a calculation process can be reduced.

As described above, in the first embodiment of the present disclosure, the imaging device 100 that can generate a stereoscopic image generates two imaged images using a difference between left and right depths of field and records the generated two imaged images. As a result, since a stereoscopic image having a large sense of depth can be recorded, a more natural stereoscopic image can be displayed.

That is, when a stereoscopic image is viewed, a focused image area can be viewed as a relatively clear stereoscopic image, and an unfocused blurry image area can be viewed as an image having some stereoscopic effect. For example, however, when the user is viewing an object with the naked eye while changing his or her focus from the front to the rear, the object can be in focus according to the change, and thus the object can be relatively clearly viewed. As described above, when the user can view a stereoscopic image with a sense similar to a feeling (a natural feeling) when viewed with the naked eye, the user can further enjoy the stereoscopic image. Thus, in the first embodiment of the present disclosure, the focused image area is increased, and thus the user can view the stereoscopic image with a sense similar to a natural feeling when an object is viewed with the naked eye.

Further, for example, even when a focal distance of a lens is long and a distance to a subject is short or even under exposure circumstances in which sufficient illuminance is not obtained and a diaphragm is opened, a relatively deep depth of field can be set. Since a relatively deep depth of field can be set as described above, when a stereoscopic image is displayed, a stereoscopic image in which subjects in a relatively broad range are in focus can be viewed, and a stereoscopic image can be enjoyed in a more natural form.

Further, even under exposure circumstances in which sufficient illuminance is not obtained and a diaphragm is opened, a relatively deep depth of field can be obtained without enhancing lighting. That is, in normal focus control, even under an imaging condition that causes blur, a depth of field can be enlarged. Thus, a sharp image in the enlarged depth of field can be viewed at the time of stereoscopic vision.

Further, an image condition for imaging a stereoscopic image can be set by the user's operation, and thus a stereoscopic image desired by the user can be easily recorded.

<2. Second Embodiment>

The first embodiment of the present disclosure has been described in connection with the example in which a set of a left-eye image and a right-eye image are recorded such that focus positions of two imaging units are different from each other as a still image file. However, some users may desire to compare a display of a stereoscopic image imaged such that focus positions of two imaging units are different from each other with a display of a stereoscopic image imaged such that focus positions of two imaging units are identical to each other and select a desired stereoscopic image which is easy to see as a display target.

In this regard, in a second embodiment of the present disclosure, an example of sequentially recording a stereoscopic image (still image) imaged such that focus positions of two imaging units are different from each other and a stereoscopic image (still image) imaged such that focus positions of two imaging units are identical to each other (so called "sequential shooting") is described. A configuration of an imaging device according to the second embodiment of the present disclosure is substantially the same as in the example illustrated in Figs. 1 to 3. Thus, the same components as in the first embodiment of the present disclosure are denoted by the same reference numerals, and a description thereof will be partially omitted.

[Imaging Mode Setting Example]

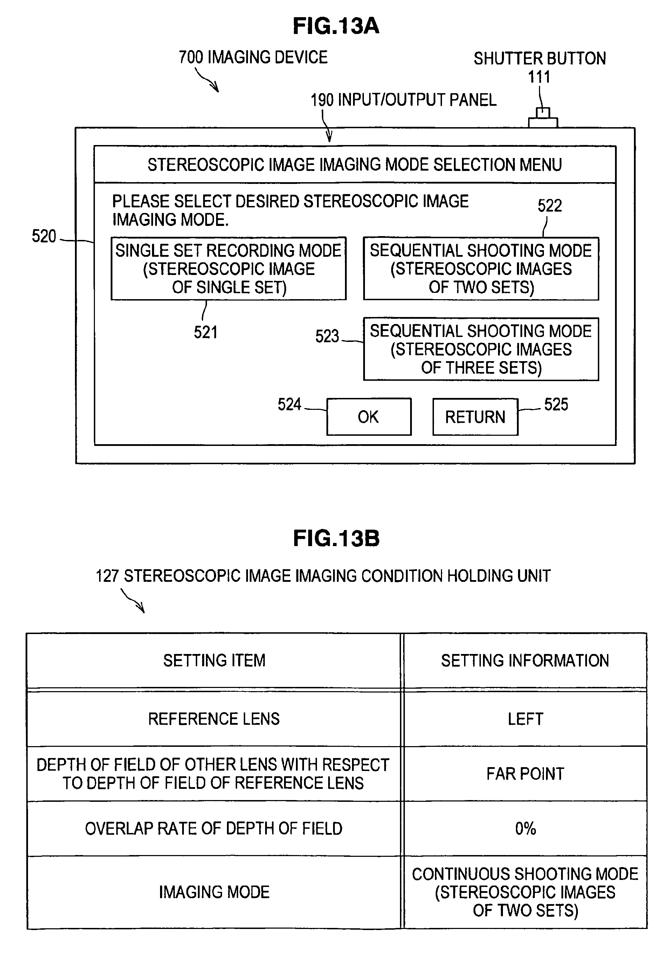

Figs. 13A and 13B are diagrams illustrating a display example of the input/output panel 190 and an example of the content held in a stereoscopic image imaging condition holding unit 127 according to the second embodiment of the present disclosure. A setting screen 520 illustrated in Fig. 13A is a screen, displayed on the input/output panel 190, for setting an imaging mode in an imaging device 700. For example, the setting screen 520 is displayed after an operation of setting the stereoscopic image imaging mode for recording a stereoscopic image is performed (for example, after an OK operation is performed on the setting screen 510 illustrated in Fig. 4B). The setting screen 520 is provided with a single set recording mode button 521, sequential shooting mode buttons 522 and 523, an OK button 524, and a return button 525.

The single set recording mode button 521 is a button pressed to set an imaging mode for recording only a stereoscopic image of a single set. That is, when the single set recording mode is set by an operation of pressing the single set recording mode button 521, a set of images (a left-eye image and a right-eye image) for displaying a stereoscopic image are recorded by an operation of pressing the shutter button 111 once.

The sequential shooting mode buttons 522 and 523 are buttons pressed to set an imaging mode for recording a plurality of stereoscopic images which are sequentially generated. Specifically, the sequential shooting mode button 522 is a button pressed to set an imaging mode for recording stereoscopic images of two sets which are sequentially generated. Of the stereoscopic images of the two sets, a stereoscopic image of one set is a stereoscopic image imaged such that focus positions of two imaging units are identical to each other. Further, a stereoscopic image of the other set is a stereoscopic image imaged such that focus positions of two imaging units are different from each other.

Further, the sequential shooting mode button 523 is a button pressed to set an imaging mode for recording stereoscopic images of three sets which are sequentially generated. Of the stereoscopic images of the three sets, a stereoscopic image of one set is imaged such that focus positions of two imaging units are identical to each other. Further, stereoscopic images of the other two sets are imaged such that focus positions of two imaging units are different from each other. Of the stereoscopic images of the other two sets, a stereoscopic image of one set is imaged such that the focus position of the other imaging unit is set to be at the far point side farther than the focus position of the imaging unit set as the reference. Further, a stereoscopic image of the other set is imaged such that the focus position of the other imaging unit is set to be at the near point side farther than the focus position of the imaging unit set as the reference.

As described above, when the sequential shooting mode is set by an operation of pressing the sequential shooting mode button 522 or 523, a plurality of sets of images (left-eye images and right-eye images) for displaying a stereoscopic image are recorded by an operation of pressing the shutter button 111 once.

In this example, the imaging mode is set by the user's manual operation, however, the imaging device 700 may automatically set the imaging mode according to a status of the imaging operation. For example, in the imaging device 700, the sequential shooting mode may be automatically set when a focal distance of a lens is long and a subject distance is short or when a diaphragm is opened by a predetermined value or more. That is, the sequential shooting mode may be automatically set when it is estimated that the depth of field is relatively shallow. In this case, it may be determined whether stereoscopic images of two sets (corresponding to the sequential shooting mode button 522) are to be recorded or stereoscopic images of three sets (corresponding to the sequential shooting mode button 523) are to be recorded, according to the depth of the depth of field.

Further, when the still image imaging mode is set, the user may set a desired imaging mode while viewing a screen (monitoring image) displayed on the input/output panel 190 in a standby state for still image recording. For example, in this case, buttons are arranged on the monitoring image in a superimposed manner, and thus the user can easily perform the setting operation while viewing the monitoring image.

The OK button 524 is a button pressed to decide on a selection made when the pressing operation of selecting the imaging mode is performed. Further, information (imaging mode information) related to the imaging mode decided by the pressing operation of the OK button 524 is held in the stereoscopic image imaging condition holding unit 122. For example, the return button 525 is a button pressed to return to a previously displayed display screen.

Fig. 13B illustrates an example of the content held in the stereoscopic image imaging condition holding unit 127. The stereoscopic image imaging condition holding unit 127 further includes a setting item "imaging mode" in addition to the stereoscopic image imaging condition holding unit 122 illustrated in Fig. 5B. Except for the added setting item, the stereoscopic image imaging condition holding unit 127 is substantially the same as the stereoscopic image imaging condition holding unit 122 illustrated in Fig. 5B. Thus, the same components as in the stereoscopic image imaging condition holding unit 122 are denoted by the same reference numerals, and a description thereof will be partially omitted.

The setting item 125 is an item which is a target of a setting operation by the user in the setting screen 520 illustrated in Fig. 13A, and the setting information 126 is setting information set by the user's setting operation in the setting screen 520 illustrated in Fig. 13A.

Fig. 13B illustrates an example in which a "sequential shooting mode (stereoscopic images of two sets)" is set as the imaging mode by a setting operation (an operation of pressing the sequential shooting mode button 522) in the setting screen 520.

[Stereoscopic Image Recording Example]

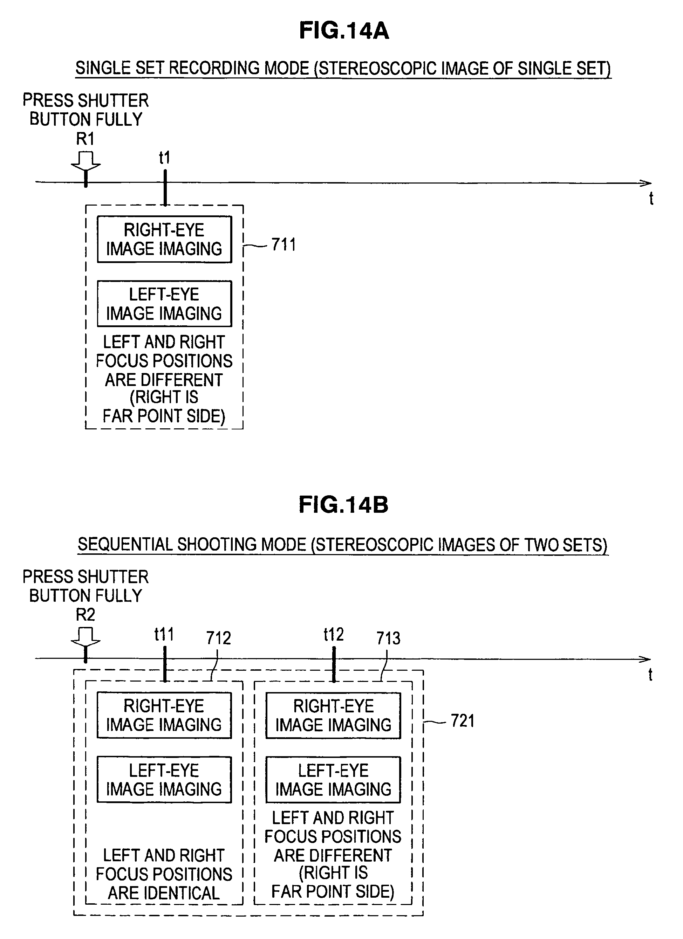

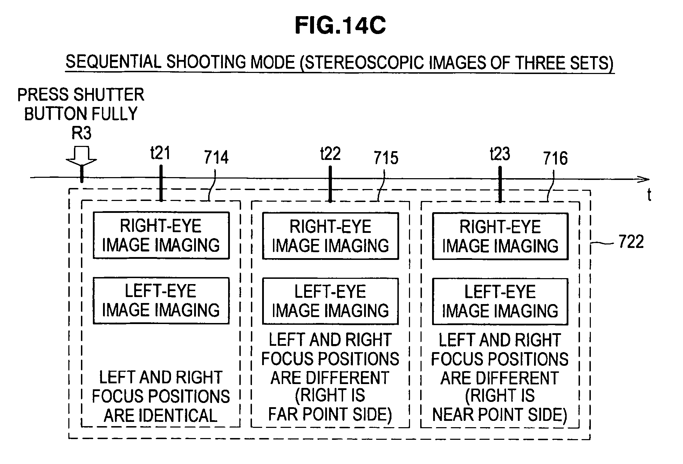

Fig. 14 is diagrams schematically illustrating recording examples of an image generated by an imaging operation by the imaging device 700 according to the second embodiment of the present disclosure. In Figs. 14A to 14C, a time axis schematically represents a relation between a recording instructing operation (a fully pressing operation of the shutter button 111) of a stereoscopic image (still image) and an image (still image) of a recording target.

Fig. 14A illustrates a recording example of an image when a single set recording mode is set by a pressing operation of the single set recording mode button 521 illustrated in Fig. 13A. When the single set recording mode is set, images 711 of a single set (a left-eye image and a right-eye image) for displaying a stereoscopic image are recorded by a pressing operation (so called, "fully pressing operation") of the shutter button 111. That is, the recording control unit 150 causes the images 711 of the single set to be recorded in the content storage unit 160 in association with each other. The images 711 of the single set are a stereoscopic image imaged such that focus positions of two imaging units are different from each other. A generation time of the image 711 of the single set is indicated by t1.

Fig. 14B illustrates a recording example of an image when a sequential shooting mode (stereoscopic images of two sets) is set by a pressing operation of the sequential shooting mode button 522 illustrated in Fig. 13A. When this sequential shooting mode is set, images of two sets (images 712 and 713 of a single set) for displaying a stereoscopic image are recorded by a pressing operation (so called, "fully pressing operation") of the shutter button 111. That is, the recording control unit 150 causes the images (the images 712 and 713 of the single set) surrounded by a rectangle 721 of a dotted line to be recorded in the content storage unit 160 in association with each other. Here, the image 712 of the single set is a stereoscopic image imaged such that focus position of two imaging units are identical to each other. Further, the image 713 of the single set is a stereoscopic image imaged such that focus positions of two imaging units are different from each other. A generation time of the image 712 of the single set is indicated by t11, and a generation time of the image 713 of the single set is indicated by t12.

Fig. 14C illustrates a recording example of an image when a sequential shooting mode (stereoscopic images of three sets) is set by a pressing operation of the sequential shooting mode button 523 illustrated in Fig. 13A. When this sequential shooting mode is set, images of three sets (images 714 to 716 of a single set) for displaying a stereoscopic image are recorded by a pressing operation (so called, "fully pressing operation") of the shutter button 111. That is, the recording control unit 150 causes the images (the images 714 to 716 of the single set) surrounded by a rectangle 722 of a dotted line to be recorded in the content storage unit 160 in association with each other. Here, the image 714 of the single set is a stereoscopic image imaged such that focus positions of two imaging units are identical to each other. Further, the images 715 and 716 of the single set are a stereoscopic image imaged such that focus positions of two imaging units are different from each other. For example, the image 715 of the single set may be a stereoscopic image imaged such that the depth of field of the right-eye imaging unit 300 is set to be at the far point side farther than the depth of field of the left-eye imaging unit 200 and so the focus position of the two imaging units are different from each other. Further, the image 716 of the single set may be a stereoscopic image imaged such that the depth of field of the right-eye imaging unit 300 is set to be at the near point side farther than the depth of field of the left-eye imaging unit 200 and so the focus position of the two imaging units are different from each other. A generation time of the image 714 of the single set is indicated by t21, a generation time of the image 715 of the single set is indicated by t22, and a generation time of the image 716 of the single set is indicated by t23.

An image generating order and an image recording order illustrated in Figs. 14B and 14C are examples and may be changed.

As described above, when a still image instructing operation is received, the control unit 121 performs control for causing the two imaging units to continuously perform a first imaging operation and a second imaging operation. Here, the first imaging operation is an imaging operation for performing focus control such that the focus positions of the two imaging units are different from each other and then generating two images. Further, the second imaging operation is an imaging operation for performing focus control such that the focus positions of the two imaging units are identical to each other and then generating two images. That is, in the second imaging operation, focus control is performed so that at least one of two subjects (two subjects (a first subject and a second subject) whose positions in the optical axis direction are different) which are focus targets by the first imaging operation can be in focus.

Here, when the sequential shooting mode is set, the focus control unit 123 performs control of changing only the focus position of the other imaging unit without changing the focus position of the imaging unit set as the reference. Further, the recording control unit 150 causes images of two or more sets which are sequentially generated to be recorded in the content storage unit 160 as an image file of a stereoscopic image in association with each other. In this case, stereoscopic image information representing that the image is a stereoscopic image and identification information representing whether or the image is a stereoscopic image imaged such that the focus positions of the two imaging units are different from each other are recorded in the image file as attribute information. Further, when the image is the stereoscopic image imaged such that the focus positions of the two imaging units are different from each other, information related to the near point and the far point may be recorded as attribute information. That is, the content stated below the rectangles 711 to 716 representing images of a single set may be recorded as attribute information.

The attribute information is recorded as described above, and then when the image file stored in the content storage unit 160 is displayed, the attribute information (the stereoscopic image information and the identification information) recorded in the image file may be used.

For example, when the image file stored in the content storage unit 160 is displayed, the display control unit 170 acquires an image file of a display target and then acquires the stereoscopic image information and the identification information recorded in the image file. Then, the display control unit 170 can display a stereoscopic image corresponding to images of two or more sets based on the acquired stereoscopic image information and the identification information. As described above, when a stereoscopic image is displayed, the content of the identification information may be displayed together with the stereoscopic image. As a result, the user who is viewing the stereoscopic image can easily understand the type of the stereoscopic image.

<3.Third Embodiment>

The first and second embodiments of the present disclosure have been described in connection with the example in which two images (a left-eye image and a right-eye image) are generated such that focus positions of two imaging units are different from each other. Here, for example, when an object flying in the sky (for example, a bird or insect) is set as a subject, the sky (for example, the deep blue sky) may be set as the background. When the sky is used as the background and a plurality of objects flying in the sky are set as imaging targets, a plurality of objects need to be stereoscopically displayed, however, the sky of the background need not be stereoscopically viewed. For this reason, for example, when two objects flying in the sky are relatively distant from each other in the optical axis direction, a space (sky) between the two objects need not be in focus, and only the two objects need to be in focus. Thus, the depths of fields need not be continuous to each other by setting the depths of field of the two imaging units to be different from each other.

In this regard, a third embodiment will be described in connection with an example in which two images (a left-eye image and a right-eye image) are generated such that the focus positions of the two imaging units are different from each other, but the depths of field of the two imaging units need not be continuous to each other. A configuration of an imaging device according to the third embodiment of the present disclosure is substantially the same as the example illustrated in Figs. 1 to 3. Thus, the same components as in the first embodiment of the present disclosure are denoted by the same reference numerals, and a description thereof will be partially omitted.

[Imaging Operation Example and Imaging Range Example]

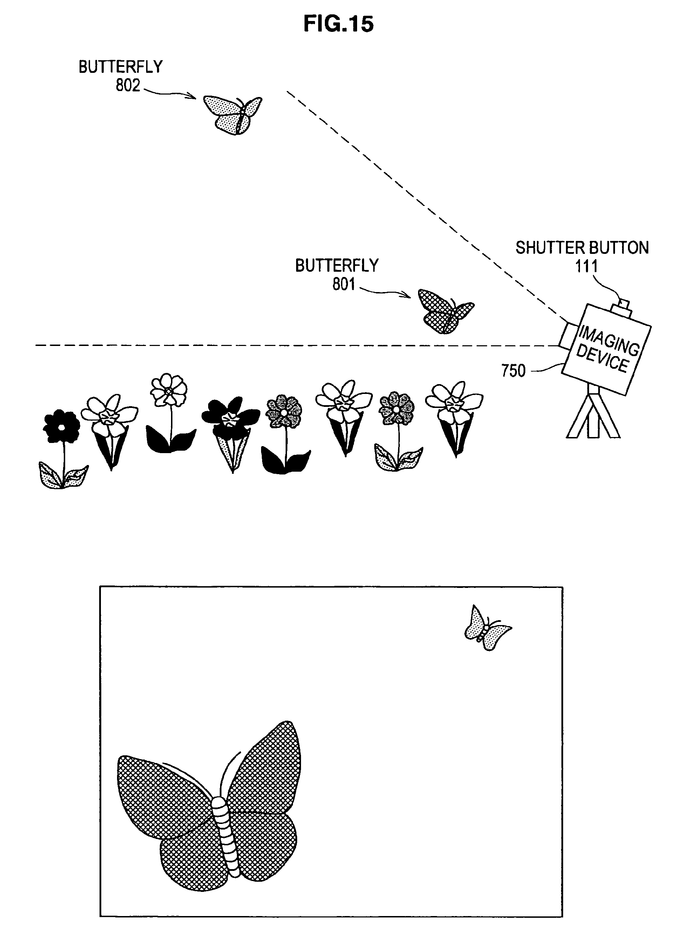

Fig. 15 is a diagram illustrating an example of a state of an imaging operation performed using an imaging device 750 and an imaging range of an image generated by the imaging operation according to the third embodiment of the present disclosure.

An upper drawing of Fig. 15 schematically illustrates a state of an imaging operation performed using the imaging device 750. Specifically, a state in which two butterflies 801 and 802 flying above flowers are set as subjects, and an imaging operation is performed using the imaging device 750 is illustrated. In the upper drawing of Fig. 15, an imaging range (an imaging range in a vertical direction) of an image generated by the imaging operation performed using the imaging device 750 is indicated by a dotted line.

A lower drawing of Fig. 15 illustrates an example of an imaging range (an imaging range in a horizontal direction and a vertical direction) of an image generated by the imaging operation performed using the imaging device 750. Specifically, an imaging range 800 of an image generated by either of the left-eye imaging unit 200 and the right-eye imaging unit 300 in a state illustrated in the upper drawing of Fig. 15 is illustrated.

As illustrated in the lower drawing of Fig. 15, of the two butterflies 801 and 802 flying over the flowers, the butterfly 801 flying at the position relatively nearer to the imaging device 750 is large in the size in the imaging range 800. However, the butterfly 802 flying at the position relatively distant from the imaging device 750 is small in the size in the imaging range 800. Further, it is assumed that the backgrounds of the butterflies 801 and 802 are the blue sky and have substantially the same color (that is, sky blue). As described above, in the case in which two objects which are relatively distant from each other in the optical axis direction are set as imaging objects, when the background has the same color, it is assumed that a stereoscopic image can be appropriately displayed by causing only the two objects to be in focus. That is, both when the background is in focus and when the background is out of focus, it is assumed that since the background has the same color, blur is not a concern. The third embodiment of the present disclosure is described in connection with an example in which the depths of fields of the two imaging units are discontinuous to each other when two images (a left-eye image and a right-eye image) are generated such that the focus positions of the two imaging units are different from each other.

[Continuous/Discontinuous Depth of Field Setting Example]

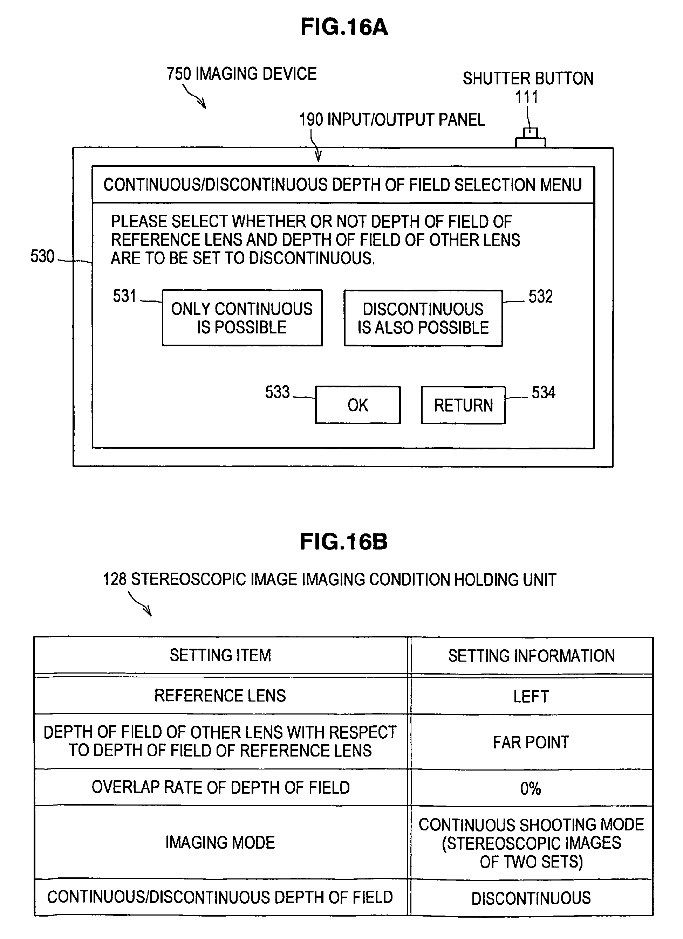

Figs. 16A and 16B are diagrams illustrating a display example of the input/output panel 190 and an example of the content held in a stereoscopic image imaging condition holding unit 128 according to the third embodiment of the present disclosure. Fig. 16A illustrates a display example of the input/output panel 190 used for setting a continuous/discontinuous depth of field.

A setting screen 530 illustrated in Fig. 16A is a screen, displayed on the input/output panel 190, for setting whether or not the depth of field of the reference lens and the depth of field of the other lens are to be set to be discontinuous to each other when focus control is performed by the focus control unit 123. For example, the setting screen 530 is displayed after an operation for setting a stereoscopic image imaging mode for recording a stereoscopic image is performed (for example, after an OK operation is performed in the setting screen 510 illustrated in Fig. 4B). The setting screen 530 is provided with an "only continuous is possible" button 531, a "discontinuous is also possible" button 532, an OK button 533, and a return button 534.

The "only continuous is possible" button 531 and the "discontinuous is also possible" button 532 are buttons pressed to select whether or not the depth of field of the reference lens and the depth of field of the other lens are set to be discontinuous to each other when focus control is performed. For example, the "only continuous is possible" button 531 is pressed when a discontinuous depth of field is not desired when an imaging operation of a left-eye image and a right-eye image for displaying a stereoscopic image is performed. Further, the "discontinuous is also possible" button 532 is pressed when a discontinuous depth of field is desired when an imaging operation of a left-eye image and a right-eye image for displaying a stereoscopic image is performed.

Further, when the still image imaging mode is set, the user may press a desired button while viewing an image (a monitoring image) displayed on the input/output panel 190 in a standby state for still image recording. In this case, for example, buttons may be arranged on the monitoring image in a superimposed manner, and thus the user can easily perform a setting operation while viewing the monitoring image.

The OK button 533 is a button pressed to decide on a selection made when the pressing operation of selecting "only continuous is possible" or "discontinuous is also possible" is performed. Further, information (continuous/discontinuous depth of field information) related to a continuous/discontinuous depth of field decided by the pressing operation of the OK button 533 is held in the stereoscopic image imaging condition holding unit 122. For example, the return button 534 is a button pressed to return to a previously displayed display screen.

Fig. 16B illustrates an example of the content held in the stereoscopic image imaging condition holding unit 128. The stereoscopic image imaging condition holding unit 128 further includes a setting item "continuous/discontinuous depth of field" in addition to the stereoscopic image imaging condition holding unit 127 illustrated in Fig. 13B. Except for the added setting item, the stereoscopic image imaging condition holding unit 128 is substantially the same as the stereoscopic image imaging condition holding unit 127 illustrated in Fig. 13B. Thus, the same components as in the stereoscopic image imaging condition holding unit 127 are denoted by the same reference numerals, and a description thereof will be partially omitted.

The setting item 125 is an item which is a target of a setting operation by the user in the setting screen 530 illustrated in Fig. 16A, and the setting information 126 is setting information set by the user's setting operation in the setting screen 530 illustrated in Fig. 16A.

Fig. 16B illustrates an example in which "discontinuous" is set as the imaging mode by a setting operation (an operation of pressing the "discontinuous is also possible" button 532) in the setting screen 530.

[Depth of Field Setting Example]

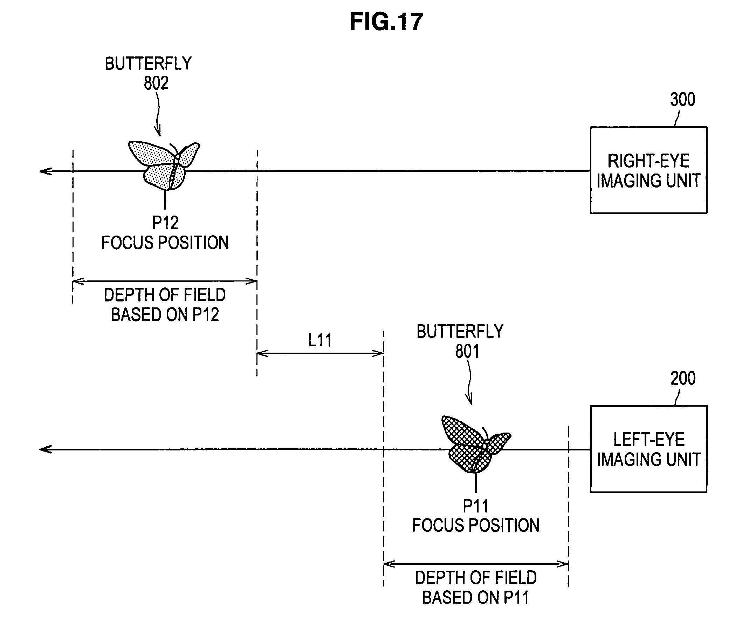

Fig. 17 is a diagram schematically illustrating a relation between the depth of field set by the focus control unit 123 and a subject according to the third embodiment of the present disclosure. That is, an example of setting the depths of field of the two imaging units when the discontinuous depth of field is set is illustrated. Specifically, an example of a depth of field when focus control is performed using two objects (butterflies 801 and 802) present at different positions in the optical axis direction of the left-eye imaging unit 200 and the right-eye imaging unit 300 as focus targets is illustrated. In this case, two objects set as the focus targets may be designated by the user's operation (for example, a touch operation on the input/output panel 190). Further, for example, the imaging device 750 may be provided with a specific object detecting unit that detects a specific object, and two specific objects among specific objects detected by the specific object detecting unit may be set as the focus targets.

For example, a focus position P11 is assumed to be set as a focus position of the left-eye imaging unit 200. In this example, the depth of field of the left-eye imaging unit 200 need not be continuous to the depth of field of the right-eye imaging unit 300. Thus, a focus position P 12 that causes a depth of field DF 12 to be discontinuous to a depth of field DF 11 of the left-eye imaging unit 200 may be set as a focus position of the right-eye imaging unit 300. That is, the depth of field DF 11 of the left-eye imaging unit 200 is away from the depth of field DF 12 of the right-eye imaging unit 300 by a distance L1.

That is, when a certain condition is satisfied, the focus control unit 123 performs focus control in each of the two imaging units so that the range of the depth of field when a left-eye image is generated can be discontinuous to the range of the depth of field when a right-eye image is generated. For example, a condition in which the background has substantially the same color and two objects which are present at the imaging device 100 side farther than the background and are away from each other by a predetermined value or more in the optical axis direction are set as the focus targets may be used as the certain condition. Further, when the certain condition is satisfied, the focus control unit 123 may automatically perform focus control in each of the two imaging units so that the ranges of the two depths of fields can be discontinuous to each other.

A description will be made in connection with two imaged images generated in a state in which the two depths of field are discontinuous to each other. Of the two images generated as described above, an image generated by the left-eye imaging unit 200 is imaged in a state in which the butterfly 801 is in focus but the butterfly 802 is out of focus. Thus, it is estimated that the butterfly 801 included in the image generated by the left-eye imaging unit 200 is clearly imaged with no blur, while the butterfly 802 is imaged with blur. Meanwhile, an image generated by the right-eye imaging unit 300 is imaged in a state in which the butterfly 802 is in focus but the butterfly 801 is out of focus. Thus, it is estimated that the butterfly 802 included in the image generated by the left-eye imaging unit 300 is clearly imaged with no blur, while the butterfly 801 is imaged with blur.

However, as described above, a subject imaged with no blur in at least one of the two images can be naturally viewed as a stereoscopic image. Further, since the backgrounds of the butterflies 801 and 802 are the blue sky and have substantially the same color, it is assumed that blur is not a concern. Thus, even when a stereoscopic image including the butterflies 801 and 802 which are relatively far away from each other in the optical axis direction is displayed, a stereoscopic image can be relatively clearly viewed.

In this example, a continuous/discontinuous depth of field is set by the user's manual operation. However, for example, a continuous/discontinuous depth of field may be automatically decided based on an attribute, a color, and the like of the subject included in an imaged image. For example, a color histogram of an imaged image is generated, and when a most common color is a specific color (for example, sky blue or white) and a relative distance between two specific objects in the optical axis direction is relatively large, a discontinuous depth of field can be decided.

The embodiments of the present disclosure have been described in connection with the example in which a fixed value is used as a value of a permissible circle of confusion diameter. However, when the user views a stereoscopic image, the permissible circle of confusion diameter changes according to a screen on which the stereoscopic image is displayed or the size of a sheet. Thus, a value of the permissible circle of confusion diameter is allowed to be settable, and the user may set a value of the permissible circle of confusion diameter according to a situation in which a stereoscopic image is viewed. For example, when a stereoscopic image is viewed using a device with a relatively small display screen (for example, a portable telephone device), a value of the permissible circle of confusion diameter can be set to a large value. However, when a stereoscopic image is viewed using a device with a relatively large display screen (for example, a large-screen television), a value of the permissible circle of confusion diameter can be set to a small value. As described above, the user may set a value of the permissible circle of confusion diameter when a stereoscopic image is generated by an imaging device in view of a situation in which the stereoscopic image is viewed. For example, a setting screen for setting a value of the permissible circle of confusion diameter may be displayed on the input/output panel 190, and the user may input and set a desired value of the permissible circle of confusion diameter. Further, the values of the permissible circle of confusion diameter may be set in advance corresponding to when a display screen on which a stereoscopic image is viewed is small, when a display screen on which a stereoscopic image is viewed is large, and when a display screen on which a stereoscopic image is viewed is normal. Then, a setting screen may be provided with a plurality of selecting buttons (for example, a "standard" button, a "large-screen" button, and a "small-screen" button) corresponding to the set values of the permissible circle of confusion diameter, and the user may set a desired value of the permissible circle of confusion diameter by an operation of pressing the selecting button. Each focus control may be performed using the set value of the permissible circle of confusion diameter.

Further, the embodiments of the present disclosure have been described in connection with the example in which two imaged images for displaying a stereoscopic image are generated using two imaging units (the left-eye imaging unit 200 and the right-eye imaging unit 300). However, even when imaged images for displaying a stereoscopic image are generated using three or more imaging units, the embodiment of the present disclosure can be applied. For example, focus positions of the respective imaging units are set to be different from one another, and so the depths of field of the respective imaging units are set to overlap or be continuous to one another. Further, when a certain condition is satisfied, a depth of field of any one of the imaging units may be set to be discontinuous.

Further, even when imaged images for displaying a stereoscopic image are generated using a single imaging unit, the embodiment of the present disclosure can be applied. For example, two imaged images may be sequentially imaged by a single imaging unit, and image processing for setting the two imaged images as a left-eye image and a right-eye image may be executed. Further, when the two imaged images are sequentially imaged, the depth of field may be changed, and then an imaging operation may be performed.

The embodiments of the present disclosure have been described in connection with the example in which focus control is executed by a control circuit integrated into an imaging device. However, focus control may be executed by a control circuit linked with an imaging device or an information processing device such as a computer. For example, in this case, a device provided with an imaging unit and a system provided with a control circuit or an information processing device such as a computer configures an imaging device.

Further, the above embodiments of the present disclosure have been described in connection with an example of an imaging device that performs focus control using a contrast AF. However, the above embodiments of the present disclosure may be applied to an imaging device that performs focus control using a phase difference AF (AF by a phase difference detecting system). Furthermore, the above embodiments of the present disclosure have been described in connection with a lens-integrated imaging device. However, the embodiments of the present disclosure can be applied to an imaging device of an interchangeable lens type. For example, in the imaging device of the interchangeable lens type, focus control may be performed by controlling a focus lens in a replacement lens based on control from an imaging device at a main body side. For example, the imaging device of the interchangeable lens type is a digital still camera (for example, a digital monocular camera) having an interchangeable lens. Further, the embodiments of the present disclosure can be applied even to an imaging device (for example, a 3D camera having a variable convergence angle) having a function of generating a stereoscopic image based on a predetermined convergence angle. Further, the embodiments of the present disclosure can be applied even to an imaging device (for example, a 3D camera in which a distance between two lenses is variable) having a function of generating a stereoscopic image based on a predetermined base line length.

Further, the embodiments of the present disclosure represent an example for embodying the present disclosure, and as clearly described in the embodiments of the present disclosure, elements in the embodiments of the present disclosure have a correspondence relation with elements specifying the invention in the claims, respectively. Similarly, elements specifying the invention in the claims have a correspondence relation with elements in the embodiments of the present disclosure having the same names, respectively. However, the present disclosure is not limited to the embodiments, and various modifications of the embodiments can be made within a scope not departing from the gist of the present disclosure

A processing sequence described in the embodiments of the present disclosure may be understood as a method having a series of processes, and may be understood as a program causing a computer to execute a series of processes or a recording medium storing the program. For example, a compact disc (CD), a mini disc (MD), a DVD, a memory card, a Blu-ray Disc (a registered trademark), or the like may be used as the recording medium.

The preferred embodiments of the present invention have been described above with reference to the accompanying drawings, whilst the present invention is not limited to the above examples, of course. A person skilled in the art may find various alternations and modifications within the scope of the appended claims, and it should be understood that they will naturally come under the technical scope of the present invention.

Reference Signs List

|  |  |
|---|---|
| 100, 700, 750 | Imaging device |
| 101 | Imaging unit |
| 110 | Operation receiving unit |
| 111 | Shutter button |

(continued)

| | |
|---|---|
| 120 | CPU |
| 121 | Control unit |
| 122 | Stereoscopic image imaging condition holding unit |
| 123, 690 | Focus control unit |
| 130 | Synchronous clock |
| 140 | Exposure control unit |
| 150 | Recording control unit |
| 160 | Content storage unit |
| 170 | Display control unit |
| 180 | Display unit |
| 190 | Input/output panel |
| 200 | Left-eye imaging unit |
| 300 | Right-eye imaging unit |
| 211, 311 | Zoom lens |
| 212, 312 | Diaphragm |
| 213, 313 | Focus lens |
| 221, 321 | Zoom lens driving motor |
| 222, 322 | Zoom lens control unit |
| 231, 331 | Diaphragm driving motor |
| 232, 332 | Diaphragm control unit |
| 241, 341 | Focus lens driving motor |
| 242, 342 | Focus lens control unit |
| 250, 350 | Imaging element |
| 260, 360 | Imaging signal processing unit |
| 680 | Focus position table holding unit |

**Claims**

1. An imaging device, comprising:

an imaging unit that images a subject and generates a first image and a second image for displaying a stereoscopic image for stereoscopic vision of the subject; and
a focus control unit that performs focus control in the imaging unit such that a first subject which is a subject included in a specific area among subjects included in the first image is in focus when the first image is generated, and performs focus control in the imaging unit such that a second subject which is another subject present at a different position from the first subject in an optical axis direction among subjects included in the second image is in focus when the second image is generated.

2. The imaging device according to claim 1, wherein the focus control unit performs each focus control such that a range of a depth of field when the first image is generated is different from a range of a depth of field when the second image is generated.

3. The imaging device according to claim 2, wherein the focus control unit performs each focus control such that the range of the depth of field when the first image is generated is continuous to the range of the depth of field when the second image is generated with no overlap.

4. The imaging device according to claim 2, wherein the focus control unit performs each focus control such that the range of the depth of field when the first image is generated overlaps the range of the depth of field when the second image is generated.

5. The imaging device according to claim 2, wherein the focus control unit performs each focus control such that the range of the depth of field when the first image is generated is discontinuous to the range of the depth of field when the second image is generated when a certain condition is satisfied.

6. The imaging device according to claim 5, wherein the certain condition is a condition in which two objects whose backgrounds have substantially the same color and which are present at the imaging device side farther than the backgrounds and away from each other by a predetermined value or more in an optical axis direction are set as the first subject and the second subject, and the focus control unit performs each focus control such that the ranges are discontinuous to each other when the certain condition is satisfied.

7. The imaging device according to claim 1, wherein the imaging unit includes a first imaging unit that generates the first image and a second imaging unit that generates the second image in synchronization with the first image, and the focus control unit performs focus control using a first focus lens included in the first imaging unit such that the first subject is in focus when the first image is generated, and performs focus control using a second focus lens included in the second imaging unit such that the second subject is in focus when the second image is generated.

8. The imaging device according to claim 7, wherein the focus control unit performs focus control using the second focus lens such that the second subject included in a range different from a range of a first depth of field specified by a position of the first subject, an F value, and a focal distance of a lens is in focus.

9. The imaging device according to claim 7, wherein the focus control unit synchronizes the first focus lens with the second focus lens and performs the focus control when the first subject and the second subject are present within a range of a hyperfocal distance.

10. The imaging device according to claim 1, wherein the focus control unit performs focus control in the imaging unit such that the first subject included in the first image is in focus, and performs focus control in the imaging unit such that the second subject included in the second image is in focus when a focal distance of a lens in the imaging unit is long and a subject distance related to the first subject is short or when an F value is smaller than a predetermined value.

11. The imaging device according to claim 1, further comprising,
an operation receiving unit that receives a selection operation of selecting whether the second subject is a subject present at the imaging device side farther than the first subject in the optical axis direction or a subject present at the side farther than the first subject in the optical axis direction,
wherein the focus control unit performs focus control such that the selected subject is in focus when the second image is generated.

12. The image processing apparatus according to claim 1, further comprising,
a recording control unit that causes the generated first image and second image to be recorded in a recording medium as moving image content in association with each other.

13. The image processing apparatus according to claim 1, further comprising,
a recording control unit that causes the generated first image and second image to be recorded in a recording medium as still image content in association with each other.

14. The image processing apparatus according to claim 13, further comprising:

   an operation receiving unit that receives an instruction operation for recording the still image; and
   a control unit that performs control of causing the imaging unit to continuously perform a first imaging operation and a second imaging operation when the instruction operation is received, the first imaging operation generating the first image and the second image by performing each focus control such that each of the first subject and the second subject is in focus, and the second imaging operation generating the first image and the second image by performing each focus control such that at least one of the first subject and the second subject is in focus, wherein the recording control unit causes the first and second images generated by the first imaging operation and the first and second images generated by the second imaging operation to be recorded in the recording medium as still image content in association with each other.

15. The image processing apparatus according to claim 14, wherein the recording control unit records identification information representing generation by the first imaging operation in association with the first and second images generated by the first imaging operation.

16. A method of controlling an imaging device, comprising:

an imaging procedure of imaging a subject and generating a first image and a second image for displaying a stereoscopic image for stereoscopic vision of the subject;
a first control procedure of performing focus control such that a first subject which is a subject included in a specific area among subjects included in the first image is in focus when the first image is generated; and
a second control procedure of performing focus control such that a second subject which is another subject present at a different position from the first subject in an optical axis direction among subjects included in the second image is in focus when the second image is generated.

17. A program causing a computer to execute:

an imaging procedure of imaging a subject and generating a first image and a second image for displaying a stereoscopic image for stereoscopic vision of the subject;
a first control procedure of performing focus control such that a first subject which is a subject included in a specific area among subjects included in the first image is in focus when the first image is generated; and
a second control procedure of performing focus control such that a second subject which is another subject present at a different position from the first subject in an optical axis direction among subjects included in the second image is in focus when the second image is generated.

# FIG.1

SHUTTER BUTTON
111

100 IMAGING DEVICE

INPUT/OUTPUT PANEL
190

RIGHT-EYE
IMAGING UNIT
300

200 LEFT-EYE
IMAGING UNIT

100 IMAGING DEVICE

SHUTTER BUTTON
111

190 INPUT/OUTPUT PANEL

FIG.2

EP 2 597 502 A1

# FIG.3

100 IMAGING DEVICE

## FIG.4A

100 IMAGING DEVICE

SHUTTER BUTTON
111

190 INPUT/OUTPUT PANEL

500

**DOMINANT EYE SELECTION MENU**

PLEASE SELECT DOMINANT EYE.
STEREOSCOPIC IMAGE IS GENERATED USING LENS
OF DOMINANT EYE AS REFERENCE LENS.

501 — | LEFT EYE | | RIGHT EYE | — 502

503 — | OK | | RETURN | — 504

## FIG.4B

100 IMAGING DEVICE

SHUTTER BUTTON
111

190 INPUT/OUTPUT PANEL

510

**OTHER LENS DEPTH OF FIELD SELECTION MENU**

PLEASE SELECT DEPTH OF FIELD OF OTHER LENS
WITH RESPECT TO DEPTH OF FIELD OF REFERENCE LENS
FROM FAR POINT OR NEAR POINT.

511 — | FAR POINT | | NEAR POINT | — 512

513 — | OK | | RETURN | — 514

# FIG.5A

100 IMAGING DEVICE

SHUTTER BUTTON
111

190 INPUT/OUTPUT PANEL

515

DEPTH OF FIELD OVERLAP RATE SETTING MENU

PLEASE SET OVERLAP RATE OF RANGE OF DEPTH
OF FIELD OF OTHER LENS WITH RESPECT TO RANGE
OF DEPTH OF FIELD OF REFERENCE LENS.

516

0%     25%     50%     75%     100%

517

518 — OK          RETURN — 519

# FIG.5B

122 STEREOSCOPIC IMAGE IMAGING CONDITION HOLDING UNIT

| SETTING ITEM | SETTING INFORMATION |
|---|---|
| REFERENCE LENS | LEFT |
| DEPTH OF FIELD OF OTHER LENS WITH RESPECT TO DEPTH OF FIELD OF REFERENCE LENS | FAR POINT |
| OVERLAP RATE OF DEPTH OF FIELD | 0% |

**FIG.6**

EP 2 597 502 A1

# FIG.7

HYPERFOCAL DISTANCE
$HD_R$

$LR_F$

FOCUS PLANE

SUBJECT DISTANCE
$L_R$

$LR_N$

300

301

632

| F | E | D | C | B | A |

RIGHT-EYE
IMAGING UNIT

$DF_R$
DEPTH OF FIELD

(a)

DEPTH OF FIELD
IN STEREOSCOPIC MODE
DF

DEPTH OF FIELD
$DF_L$

631

200

LEFT-EYE
IMAGING UNIT

| F | E | D | C | B | A |

201

$LL_N$

FOCUS PLANE  SUBJECT DISTANCE
$L_L$

$LL_F$

$HD_L$
HYPERFOCAL DISTANCE

(b)

# FIG.8

CASE IN WHICH FOCUS POSITIONS ARE IDENTICAL TO EACH OTHER
WHEN LEFT-EYE IMAGE AND RIGHT-EYE IMAGE ARE IMAGED

CASE IN WHICH FOCUS POSITIONS ARE DIFFERENT FROM EACH OTHER
WHEN LEFT-EYE IMAGE AND RIGHT-EYE IMAGE ARE IMAGED

# FIG.9

CASE IN WHICH FOCUS POSITIONS ARE IDENTICAL TO EACH OTHER
WHEN LEFT-EYE IMAGE AND RIGHT-EYE IMAGE ARE IMAGED

661

662

CASE IN WHICH FOCUS POSITIONS ARE DIFFERENT FROM EACH OTHER
WHEN LEFT-EYE IMAGE AND RIGHT-EYE IMAGE ARE IMAGED

663

664

EP 2 597 502 A1

# FIG.10

START

S901
HAS SETTING CAUSING STEREOSCOPIC IMAGE TO BE RECORDED SUCH THAT FOCUS POSITIONS ARE DIFFERENT FROM EACH OTHER BEEN MADE?

No

S917
STEREOSCOPIC IMAGE RECORDING PROCESS THAT CAUSE FOCUS POSITIONS TO BE IDENTICAL TO EACH OTHER

Yes

S902
ACQUIRE ALL SETTING INFORMATION RELATED TO STEREOSCOPIC IMAGE

S903
ACQUIRE ALL IMAGING INFORMATION

S904
FOCUS CONTROL OF REFERENCE LENS

S905
IS SUBJECT OF FOCUS TARGET PRESENT WITHIN HYPERFOCAL DISTANCE

No

Yes

S906
HAS DEPTH OF FIELD OF OTHER LENS BEEN SET TO FAR POINT SIDE?

No

Yes

S912
FOCUS POSITION OF OTHER LENS IS IDENTICAL TO FOCUS POSITION OF REFERENCE LENS

S907
CALCULATE FOCUS POSITION OF OTHER LENS AT FAR POINT SIDE BASED ON FOCUS POSITION OF REFERENCE LENS

S908
CALCULATE FOCUS POSITION OF OTHER LENS AT NEAR POINT SIDE BASED ON FOCUS POSITION OF REFERENCE LENS

S913
FOCUS CONTROL OF OTHER LENS

S909
FOCUS CONTROL OF OTHER LENS

S914
GENERATES TWO IMAGES WHOSE FOCUS POSITIONS ARE IDENTICAL TO EACH OTHER

S910
GENERATE TWO IMAGES WHOSE FOCUS POSITIONS ARE DIFFERENT FROM EACH OTHER

S915
RECORD TWO GENERATED IMAGES AS IMAGE FILE OF STEREOSCOPIC IMAGE IN ASSOCIATION WITH ATTRIBUTE INFORMATION

S91
RECORD TWO GENERATED IMAGES AS IMAGE FILE OF STEREOSCOPIC IMAGE IN ASSOCIATION WITH ATTRIBUTE INFORMATION

END

# FIG.11

670 IMAGING DEVICE

101
IMAGING UNIT

680
FOCUS POSITION
TABLE HOLDING UNIT

300
RIGHT-EYE
IMAGING UNIT

690
FOCUS
CONTROL UNIT

150
RECORDING
CONTROL UNIT

160
CONTENT
STORAGE UNIT

200
LEFT-EYE
IMAGING UNIT

122
STEREOSCOPIC
IMAGE IMAGING
CONDITION
HOLDING UNIT

121
CONTROL UNIT

170
DISPLAY
CONTROL UNIT

110
OPERATION
RECEIVING UNIT

180
DISPLAY UNIT

# FIG.12

681 FOCUS POSITION TABLE

| IMAGING INFORMATION (682) | | | IMAGING INFORMATION | | |
|---|---|---|---|---|---|
| | LENS FOCAL DISTANCE : 45~51mm<br><br>DIAPHRAGM VALUE (F NO.) : 2.8~3.0<br><br>PERMISSIBLE CIRCLE OF CONFUSION DIAMETER : 0.03mm | | | LENS FOCAL DISTANCE : ···<br><br>DIAPHRAGM VALUE (F NO.) : ···<br><br>PERMISSIBLE CIRCLE OF CONFUSION DIAMETER : ··· | ··· |
| FOCAL DISTANCE (cm) OF REFENRECE LENS (683) | FOCAL DISTANCE (cm) OF OTHER LENS | FOCAL DISTANCE (cm) OF REFENRECE LENS | FOCAL DISTANCE (cm) OF OTHER LENS | | ··· |
| 100~103.5 | 107.2 | ··· | ··· | | |
| 103.6~107.2 | 111.2 | ··· | ··· | | |
| 107.3~111.2 | 115.5 | ··· | ··· | | ··· |
| 111.3~115.5 | 120.2 | ··· | ··· | | |
| ··· | ··· | ··· | ··· | | |

EP 2 597 502 A1

# FIG.13A

700 IMAGING DEVICE

SHUTTER BUTTON
111

190 INPUT/OUTPUT PANEL

STEREOSCOPIC IMAGE IMAGING MODE SELECTION MENU

PLEASE SELECT DESIRED STEREOSCOPIC IMAGE IMAGING MODE.

522

520

| SINGLE SET RECORDING MODE (STEREOSCOPIC IMAGE OF SINGLE SET) | SEQUENTIAL SHOOTING MODE (STEREOSCOPIC IMAGES OF TWO SETS) |

521

523 — SEQUENTIAL SHOOTING MODE (STEREOSCOPIC IMAGES OF THREE SETS)

524 — OK    RETURN — 525

# FIG.13B

127 STEREOSCOPIC IMAGE IMAGING CONDITION HOLDING UNIT

| SETTING ITEM | SETTING INFORMATION |
|---|---|
| REFERENCE LENS | LEFT |
| DEPTH OF FIELD OF OTHER LENS WITH RESPECT TO DEPTH OF FIELD OF REFERENCE LENS | FAR POINT |
| OVERLAP RATE OF DEPTH OF FIELD | 0% |
| IMAGING MODE | CONTINUOUS SHOOTING MODE (STEREOSCOPIC IMAGES OF TWO SETS) |

# FIG.14A

SINGLE SET RECORDING MODE (STEREOSCOPIC IMAGE OF SINGLE SET)

PRESS SHUTTER
BUTTON FULLY
R1

t1

RIGHT-EYE
IMAGE IMAGING

711

LEFT-EYE
IMAGE IMAGING

LEFT AND RIGHT
FOCUS POSITIONS
ARE DIFFERENT
(RIGHT IS
FAR POINT SIDE)

t

# FIG.14B

SEQUENTIAL SHOOTING MODE (STEREOSCOPIC IMAGES OF TWO SETS)

PRESS SHUTTER
BUTTON FULLY
R2

t11    712          t12    713

RIGHT-EYE
IMAGE IMAGING

RIGHT-EYE
IMAGE IMAGING

721

LEFT-EYE
IMAGE IMAGING

LEFT-EYE
IMAGE IMAGING

LEFT AND RIGHT
FOCUS POSITIONS
ARE DIFFERENT
(RIGHT IS
FAR POINT SIDE)

LEFT AND RIGHT
FOCUS POSITIONS
ARE IDENTICAL

t

# FIG.14C

SEQUENTIAL SHOOTING MODE (STEREOSCOPIC IMAGES OF THREE SETS)

PRESS SHUTTER
BUTTON FULLY
R3

t21  714       t22  715       t23  716

t

| RIGHT-EYE IMAGE IMAGING | RIGHT-EYE IMAGE IMAGING | RIGHT-EYE IMAGE IMAGING | 722 |

| LEFT-EYE IMAGE IMAGING | LEFT-EYE IMAGE IMAGING | LEFT-EYE IMAGE IMAGING |

LEFT AND RIGHT FOCUS POSITIONS ARE IDENTICAL

LEFT AND RIGHT FOCUS POSITIONS ARE DIFFERENT (RIGHT IS FAR POINT SIDE)

LEFT AND RIGHT FOCUS POSITIONS ARE DIFFERENT (RIGHT IS NEAR POINT SIDE)

# FIG.15

BUTTERFLY
802

BUTTERFLY
801

SHUTTER BUTTON
111

IMAGING
DEVICE

750

# FIG.16A

750 IMAGING DEVICE

SHUTTER BUTTON
111

190 INPUT/OUTPUT PANEL

530

CONTINUOUS/DISCONTINUOUS DEPTH OF FIELD SELECTION MENU

PLEASE SELECT WHETHER OR NOT DEPTH OF FIELD OF REFERENCE LENS AND DEPTH OF FIELD OF OTHER LENS ARE TO BE SET TO DISCONTINUOUS.

531
ONLY CONTINUOUS IS POSSIBLE

DISCONTINUOUS IS ALSO POSSIBLE
532

533
OK

RETURN
534

# FIG.16B

128 STEREOSCOPIC IMAGE IMAGING CONDITION HOLDING UNIT

| SETTING ITEM | SETTING INFORMATION |
|---|---|
| REFERENCE LENS | LEFT |
| DEPTH OF FIELD OF OTHER LENS WITH RESPECT TO DEPTH OF FIELD OF REFERENCE LENS | FAR POINT |
| OVERLAP RATE OF DEPTH OF FIELD | 0% |
| IMAGING MODE | CONTINUOUS SHOOTING MODE (STEREOSCOPIC IMAGES OF TWO SETS) |
| CONTINUOUS/DISCONTINUOUS DEPTH OF FIELD | DISCONTINUOUS |

# FIG.17

BUTTERFLY
802

RIGHT-EYE
IMAGING UNIT

300

P12
FOCUS POSITION

DEPTH OF FIELD
BASED ON P12

L11

BUTTERFLY
801

LEFT-EYE
IMAGING UNIT

200

P11
FOCUS POSITION

DEPTH OF FIELD
BASED ON P11

EP 2 597 502 A1

| INTERNATIONAL SEARCH REPORT | International application No. |
|---|---|
| | PCT/JP2011/063662 |

A.  CLASSIFICATION OF SUBJECT MATTER
*G02B7/28*(2006.01)i, *G02B7/08*(2006.01)i, *G03B13/36*(2006.01)i, *G03B35/08*
(2006.01)i, *H04N5/225*(2006.01)i, *H04N5/232*(2006.01)i, *H04N13/02*(2006.01)i

According to International Patent Classification (IPC) or to both national classification and IPC

B.  FIELDS SEARCHED

Minimum documentation searched (classification system followed by classification symbols)
G02B7/28, G02B7/08, G03B13/36, G03B35/08, H04N5/225, H04N5/232, H04N13/02

Documentation searched other than minimum documentation to the extent that such documents are included in the fields searched
Jitsuyo Shinan Koho          1922–1996   Jitsuyo Shinan Toroku Koho   1996–2011
Kokai Jitsuyo Shinan Koho    1971–2011   Toroku Jitsuyo Shinan Koho   1994–2011

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2005-210217 A  (Olympus Corp.),<br>04 August 2005 (04.08.2005),<br>paragraphs [0030], [0044]; fig. 1 to 4<br>(Family: none) | 1-17 |
| A | JP 2010-107664 A  (Fujifilm Corp.),<br>13 May 2010 (13.05.2010),<br>entire text; all drawings<br>(Family: none) | 1-17 |
| P,X | JP 2010-204483 A  (Fujifilm Corp.),<br>16 September 2010 (16.09.2010),<br>entire text; all drawings<br>(Family: none) | 1-4,7,8,12,<br>13,16,17 |

☐   Further documents are listed in the continuation of Box C.          ☐   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>05 July, 2011 (05.07.11) | Date of mailing of the international search report<br>12 July, 2011 (12.07.11) |
|---|---|
| Name and mailing address of the ISA/<br>Japanese Patent Office | Authorized officer |
| Facsimile No. | Telephone No. |

Form PCT/ISA/210 (second sheet) (July 2009)

**EP 2 597 502 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006162990 A
- JP 2004133637 A
- JP 2009115981 A

**Non-patent literature cited in the description**

- **UENO CHIZUKO et al.** Photography Terms Dictionary. Nippon Camera Co., Ltd, 15 October 1991, 193-195

47